# EUROPEAN PATENT SPECIFICATION

(11) **EP 4 487 933 B1**
(45) Date of publication and mention of the grant of the patent: **29.07.2026**
(21) Application number: 24154852.8
(22) Date of filing: 30.01.2024
(51) Int. Cl.: B01D 24/12, E04H 4/12

(54) **FILTER AND ABOVE-GROUND POOL**
FILTER UND OBERIRDISCHES SCHWIMMBECKEN
FILTRE ET BASSIN HORS SOL

(30) Priority: 05.07.2023 CN 202321761156 U
(43) Date of publication of application: 08.01.2025
(73) Proprietor: Bestway Inflatables & Material Corp., Shanghai 201812 (CN)
(72) Inventor: CHEN, Xiaobo, Jinhua City, Zhejiang Province, (CN); DAI, Zhipeng, Jinhua City, Zhejiang Province, (CN); FANG, Yongcun, , Jinhua City, Zhejiang Province, (CN); CHEN, Guohong, Jinhua City, Zhejiang Province, (CN); YE, Feng, Jinhua City, Zhejiang Province, (CN)
(74) Representative: Inchingalo, Simona

(56) References cited:
- WO-A1-2012/159158
- CN-A- 110 575 699
- CN-U- 208 493 373
- CN-U- 209 575 955
- CN-U- 219 023 567
- CN-U- 219 297 322
- ES-U- 1 221 455
- US-B1- 11 583 788

## Description

### BACKGROUND

### 1. Field

Example embodiments relate to pool water filtration, and in particular to a filter, a water filter, and an above-ground pool.

### 2. Description of Related Art

An above-ground frame pool is an outdoor leisure product for people. In order to ensure the cleanliness of water in the frame pool, a filter is used to filter the water in the frame pool. Known filters are disclosed in CN209575955U, CN219023567U, CN219297322U, ES1221455U.

The filter media often used in the filters include quartz sand, or filter elements composed of non-woven fabrics. Quartz sand has a poor filtering effect. Non-woven fabric is not uniform in density and poor in filtering effect, and filter elements are complex in structure, cumbersome to process, and high in cost.

Therefore, the contaminants filtered out by such filter media are prone to accumulation on the surfaces of the filter media or to deposition in the filters, which often leads to a poor filtering effect and a low contaminant interception efficiency. In addition, if filter media are not replaced for a long time, accumulated contaminants may also lead to a decrease in water flow and damage to filter pumps used by the filters.

### SUMMARY

Example embodiments may address at least the above problems and/or disadvantages and other disadvantages not described above. Also, example embodiments are not required to overcome the disadvantages described above, and may not overcome any of the problems described above.

According to an aspect of an example embodiment, a filter comprises: a filter cartridge, comprising a side wall and an upper end; a cartridge cover disposed on the upper end of the filter cartridge, the cartridge cover and the filter cartridge together defining a first chamber; a filter chamber disposed in the first chamber; a fiber filter material disposed in the filter chamber; a water intake channel disposed on one of the filter cartridge and the cartridge cover and in fluid communication with the filter chamber; and a water discharge channel in fluid communication with the filter chamber.

The fiber filter material may comprise a plurality of substantially spherical fiber balls, each of the plurality of fiber balls comprising a fixing member and a plurality of fiber filaments knotted together by the fixing member, such that the fixing member is disposed at a center of the fiber ball; a volume of the plurality of fiber balls comprises 40% to 60% of a volume of the filter cartridge; a density of each of the plurality of fiber balls is 1.38 g/cm³; and a specific surface area of each of the plurality of fiber balls is 3000 m²/m³.

The filter chamber comprises a first filter chamber; and a second filter chamber located below the first filter chamber in a vertical direction and spaced from and in fluid communication with the first filter chamber, wherein the fiber filter material is disposed in the second filter chamber; and the filter further comprises a water distribution sheet disposed in the first chamber, the water distribution sheet and the cartridge cover together defining the first filter chamber; and may comprise a supporting component disposed in the first chamber and spaced below the water distribution sheet at an interval in the vertical direction, the supporting component and the water distribution sheet together defining the second filter chamber.

The water distribution sheet may be detachably connected to the cartridge cover; the water distribution sheet may comprise: first grooves spaced at intervals along an edge of the water distribution sheet; and first bumps protruding toward the supporting component in the vertical direction and disposed on edges of the first grooves; and the cartridge cover may comprise: a cartridge cover side wall extending downward in the vertical direction; and first hooks disposed at positions at a bottom of the cartridge cover corresponding positions of the first grooves, wherein the first hooks comprise second bumps configured to engage with the first bumps.

An edge of the supporting component may extend upward in the vertical direction, thereby forming a side wall of the supporting component; the side wall of the supporting component, the supporting component, and the water distribution sheet may together define the second filter chamber; an upper end of the side wall of the supporting component may extend outward, thereby forming a first flange; and an upper end of the side wall of the filter cartridge may comprise a step which supports the first flange thereon, thereby supporting the supporting component in the filter cartridge.

The supporting component may be detachably connected to the water distribution sheet; the water distribution sheet may comprise: a plurality of first grooves spaced at intervals along an edge of the water distribution sheet; and a plurality of first bumps protruding towards the cartridge cover in the vertical direction and each disposed on an edge of a respective one of the plurality of first grooves; the supporting component may comprise: a side wall extending upward along an edge of the supporting component and comprising a plurality of second grooves spaced along an upper end of the side wall of the supporting component; and a plurality of hooks disposed, at positions along the upper end of the side wall of the supporting component corresponding to positions of the plurality of first grooves along the edge of the water distribution sheet, each of the plurality of hooks comprising a second bump disposed thereon and configured to engage with a corresponding one of the plurality of first bumps; and a handle extending vertically from a side of the water distribution sheet facing the cartridge cover.

The filter may further comprise: a step disposed at an upper end of the side wall of the filter cartridge; wherein the water distribution sheet is disposed on the step.

The water distribution further comprises a first boss extending vertically upward from a center of the water distribution sheet; a plurality of first through holes extending through the first boss in the vertical direction; a plurality of first ribs spaced from each other in a circumferential direction of the water distribution sheet and each extending in a radial direction from the first boss to an edge of the water distribution sheet, wherein a height of each of the plurality of first ribs increases from the first boss to the edge of the water distribution sheet; and a plurality of second ribs spaced apart from each other in the radial direction and each extending in the circumferential direction of the water distribution sheet; and a plurality of second through holes, each extending through the water distribution sheet in a vertical direction between two adjacent ones of the plurality of first ribs and between two adjacent ones of the plurality of second ribs; and may comprise a central rib of the plurality of second ribs which is a first reinforcing rib extending in the circumferential direction of the water distribution sheet, wherein a height of the first reinforcing rib is greater than a height of each other of the plurality of second ribs.

The filter may further comprise: a supporting component disposed in the first chamber, the supporting component and the cartridge cover together defining the filter chamber, wherein the fiber filter material is disposed in the filter chamber; wherein the supporting component comprises a plurality of third through holes extending therethrough in a vertical direction; and wherein each of the plurality of third through holes extends in an elongated shape in a radial direction of the supporting component.

The filter cartridge may further comprise a partition plate spaced below the supporting component in the vertical direction, wherein the partition plate and the side wall of the filter cartridge are integrally formed; the supporting component, the partition plate, and the side wall of the filter cartridge may together define a transition chamber configured to converge water flowing through the second filter chamber; the filter cartridge may further a second flange disposed on one of the partition plate or surrounding an inner surface of the side wall of the filter cartridge, wherein the supporting component is disposed on the second flange; the filter may further comprise a filter pump disposed below the partition plate and comprising a filter pump water intake channel and the water discharge channel; and a part of the partition plate may be recessed downward thereby forming a filter pump water inlet in communication with the filter pump water intake channel.

According to an aspect of an example embodiment, a filter comprises: a filter cartridge comprising a side wall and an upper end; a cartridge cover disposed on the upper end of the filter cartridge; a first water distribution sheet disposed inside the filter cartridge, wherein the first water distribution sheet and the cartridge cover together define a first filter chamber; a second water distribution sheet disposed inside the filter cartridge, wherein the second water distribution sheet and the first water distribution sheet together define a second filter chamber; a fiber filter material disposed in the second filter chamber; a water intake channel in fluid communication with the first filter chamber; and a water discharge channel in fluid communication with the second filter chamber.

The filter may further comprise: a partition plate disposed in the filter cartridge, wherein the partition plate and the second water distribution sheet together define a transition chamber; and a filter pump disposed below the partition plate and in fluid communication with the transition chamber.

According to an aspect of an example embodiment, a water filter comprises: a water pump, comprising a water inlet and a water outlet; a coarse filter cartridge in fluid communication with the water inlet of the water pump; a water filter cartridge comprising an upper end; a multi-position valve disposed at the upper end of the water filter cartridge, wherein the water filter cartridge is in fluid communication with the water outlet of the water pump via the multi-position valve; a fiber filter material disposed in the water filter cartridge; a water intake channel disposed on the coarse filter cartridge; and a water discharge channel disposed on the multi-position valve.

The fiber filter material may comprise a plurality of fiber balls; a mass of each of the plurality of fiber balls may be 3 g to 5 g; and a total mass of the plurality of fiber balls may be 240 g to 1000 g.

An above-ground pool, comprising: a side wall comprising a water inlet and a water outlet; a filter described above; a water intake pipe, comprising a first end in communication with the water outlet of the above-ground pool, and a second end in communication with the water intake channel of the filter; and a water discharge pipe, comprising a first end in communication with the water discharge channel of the filter, and a second end in communication with the water inlet of the above-ground pool.

An above-ground pool comprising: a side wall comprising a water inlet and a water outlet; a water filter described above; a water intake pipe comprising a first end in communication with the water outlet of the above-ground pool, and a second end in communication with the water intake channel of the water filter; and a water discharge pipe comprising a first end in communication with the water discharge channel of the water filter and a second end in communication with the water inlet of the above-ground pool.

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a perspective view of a frame pool according to an example embodiment;
FIG. 2 is a perspective view of a filter according to an example embodiment;
FIG. 3 is an enlarged view of part A of FIG. 1;
FIG. 4 is an enlarged view of part B of FIG. 1;
FIG. 5 is a perspective view of a frame pool according to another example embodiment;
FIG. 6 is an enlarged view of part C of FIG. 5;
FIG. 7 is a schematic exploded structure diagram of a filter according to an example embodiment;
FIG. 8a is a schematic cross-sectional structure diagram of a filter according to an example embodiment, which does not comprise a water distribution sheet;
FIG. 8b is a cross-sectional view of a filter according to an example embodiment, which comprises a first water distribution sheet;
FIG. 8c is a schematic cross-sectional structure diagram of a filter according to an example embodiment, which comprises a first and a second water distribution sheet;
FIG. 8d is a schematic cross-sectional structure diagram of a filter according to an example embodiment, which comprises a first and a second water distribution sheet and a protruding post;
FIG. 9 is a schematic cross-sectional structure diagram of a water flow direction of a filter according to an example embodiment;
FIG. 10 is a schematic structure diagram of a fiber ball according to an example embodiment;
FIG. 11 is a perspective view of a cartridge cover of a filter according to an example embodiment;
FIG. 12 is an enlarged view of part D of FIG. 8b;
FIG. 13 is a schematic exploded structure diagram of an exhaust valve, a cartridge cover and a water distribution sheet of a filter according to an example embodiment;
FIG. 14 is a schematic diagram of an exhaust valve of a filter according to an example embodiment, which is in an exhaust state;
FIG. 15 is an enlarged view of part E of FIG. 8b;
FIG. 16 is a perspective view of a water distribution sheet of a filter according to an example embodiment;
FIG. 17 is a bottom view of a filter according to an example embodiment after a water distribution sheet and a cartridge cover are assembled;
FIG. 18 is an enlarged view of part F of FIG. 14;
FIG. 19 is a perspective view of a supporting component of a filter according to an example embodiment;
FIG. 20 is an internal view of a filter cartridge of a filter according to an example embodiment;
FIG. 21 is a cross-sectional view of a filter cartridge according to another example embodiment;
FIG. 22 is an internal view of a filter cartridge of a filter according to another example embodiment;
FIG. 23 is a perspective view of a supporting component of a filter according to still another example embodiment;
FIG. 24 is a cross-sectional view of a filter according to still another example embodiment, in which a supporting component is mounted in a filter cartridge;
FIG. 25 is a perspective view of a supporting component and a water distribution sheet of a filter according to yet another example embodiment;
FIG. 26 is a perspective view of a filter according to yet another example embodiment, in which a supporting component and a water distribution sheet are mounted together;
FIG. 27 is an enlarged view of part G of FIG. 26;
FIG. 28 is a cross-sectional view of a filter according to yet another example embodiment, in which a supporting component and a water distribution sheet are mounted in a filter cartridge;
FIG. 29 is a perspective view of a water filter according to an example embodiment; and
FIG. 30 is a schematic cross-sectional structure diagram of a water filter according to an example embodiment.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described here in detail.

A used herein, orientation or positional relationships indicated by the terms such as "upper," "lower," "inner," and "bottom" are based on the orientation or positional relationships shown in the drawings or the orientation or positional relationships in which a product may be customarily placed during use, and are only intended to facilitate and simplify description , rather than indicating or implying that the apparatus or element indicated must have a specific orientation or be configured and operated in the specific orientation, and therefore cannot be construed as limiting.

It should also be noted that the terms "arrange," "connected," and "connection" should be understood in a broad sense, unless otherwise explicitly specified and limited. For example, a connection can be a secured connection, a detachable connection, or an integral connection; or may be a mechanical connection or an electrical connection; and elements may be directly connected, or indirectly connected by means of an intermediate medium, or communication between interiors of two elements. For those of ordinary skill in the art, the specific meaning of the terms used herein should be understood in specific cases.

One or more example embodiments described herein provide a filter 1. The filter 1 may provide a good filtering effect and low maintenance costs. The filter 1 shown in the accompanying drawings is suitable for filtering operations in various pools (such as, but not limited to, trapezoidal pools and inflatable pools), including a frame pool 2. However, application scenarios of such a filter 1 are not limited to these pools, and the filter may also be applied to other application scenarios that require water filtration. Example embodiments are described herein by taking an example that the filter 1 is applied to a frame pool 2.

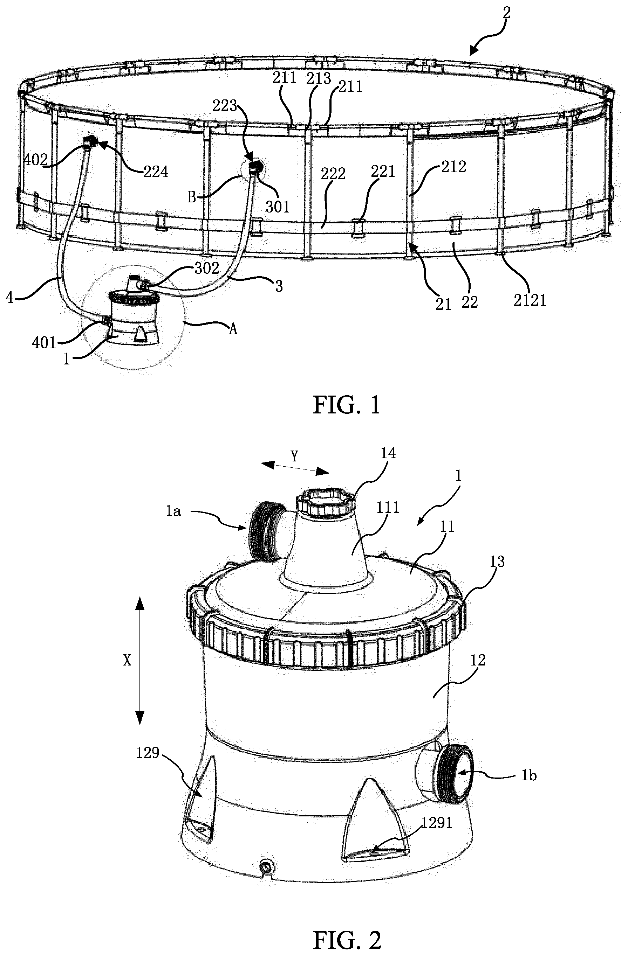

FIG. 1 shows a first perspective view of a frame pool 2 according to an example embodiment. The frame pool 2 comprises a pool frame 21 and a pool liner 22. The pool frame 21 supports the pool liner 22 to form a frame pool 2 configured to store water in a water storage space enclosed by the pool liner.

The pool frame 21 may comprise a plurality of horizontal supporting members 211, a plurality of vertical supporting members 212, and a plurality of T-joints 213, wherein every two adjacent horizontal supporting members 211 and one vertical supporting member 212 are connected by means of one T-joint 213, and wherein the plurality of horizontal supporting members 211 and the plurality of vertical supporting members 212 are sequentially connected by means of the plurality of T-joints 213 to form a circular pool frame 21. The vertical supporting members 212 are configured to support a horizontal frame, which is formed by sequentially connecting the plurality of horizontal supporting members 211 and the plurality of T-joints 213, on the ground.

A shape of the pool frame 21, which is described as circular in this example embodiment, for example, is not limited and may alternately take another shape such as, but not limited to oval or rectangular.

A bottom end of the vertical supporting member 212 may be connected to a supporting base 2121, and the supporting base 2121 is used to increase a contact area between the vertical supporting member 212 of the pool frame 21 and the ground, so as to aid in improving an overall stability of the pool frame 21.

An outer surface of the pool liner 22 is provided with reinforcing devices 221 and a reinforcing band 222, and the reinforcing devices 221 are connected to the outer surface of the pool liner 22. Specifically, each reinforcing device 221 is arranged on the outer surface of the pool liner 22 between two adjacent vertical supporting members 212; and the reinforcing band 222 passes through the reinforcing devices 221, and is arranged, around the frame pool 2, on outer surfaces of the vertical supporting members 212 to bind the vertical supporting members 212 between the pool liner 22 and the reinforcing band 222, such that the vertical supporting members 212 can lean against the outer surface of the pool liner 22, thereby aiding in improving the tension of the pool liner 22 and in preventing the vertical supporting members 212 from deflecting toward the outside of the pool.

In some example aspects, the reinforcing band 222 may be arranged on the frame pool 2 at a height approximately equal to 1/3 of the height of the frame pool 2, so that a lower structure of the frame pool 2 can be effectively reinforced, and the lower portion of the pool liner 22 of the frame pool 2 may have a greater bearing capacity.

In order to cyclically filter the water in the frame pool 2, the frame pool 2 is connected to the filter 1. Of course, the filter 1 is not limited by its connection with the frame pool or to any other element. The filter 1 may, for example, be connected to an inflatable pool or a trapezoidal pool by using the related technical solutions described below, and the effect of circulating filtration of water may be similarly achieved.

Referring to FIG. 1, FIG. 2 and FIG. 3, the pool liner 22 may be provided with a pool water outlet 223 and a pool water inlet 224. The filter 1 is provided with a water intake channel 1a and a water discharge channel 1b. The water intake channel 1a of the filter 1 is in fluid communication with the pool water outlet 223 of the pool liner 22 by means of a water intake pipe 3. The water intake pipe 3 may comprise a first end 301 and a second end 302, wherein the first end 301 of the water intake pipe 3 is in fluid communication with the pool water outlet 223, and the second end 302 of the water intake pipe 3 is in fluid communication with the water intake channel 1a of the filter 1. The water discharge channel 1b of the filter 1 is in fluid communication with the pool water inlet 224 of the pool liner 22 by means of a water discharge pipe 4. The water discharge pipe 4 may comprise a first end 401 and a second end 402, wherein the first end 401 of the water discharge pipe 4 is in fluid communication with the water discharge channel 1b of the filter 1, and the second end 402 is in fluid communication with the pool water inlet 224.

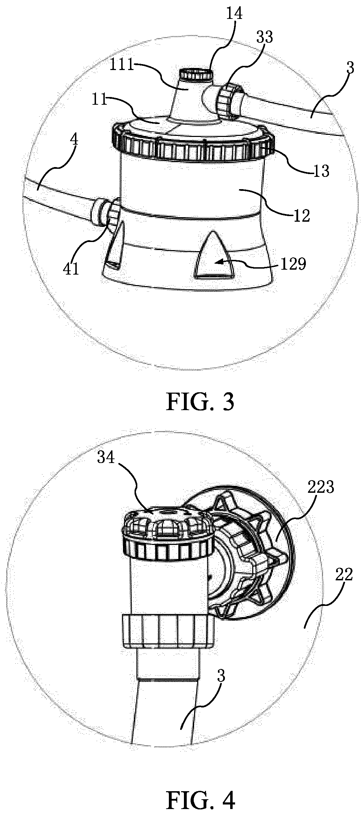

FIG. 4 shows a schematic diagram of the connection between the water intake pipe 3 and the pool water outlet 223 of the pool liner 22 according to an example embodiment. Referring to FIGS. 1 to 4, specifically, the water intake pipe 3 is connected to the pool water outlet 223 by means of a connector 34. This example embodiment is not specifically limited to a specific structure of the connector 34, as long as the water in the pool liner 22 can flow into the filter 1 through the water intake pipe 3, and filtered water can flow into the pool liner 22 through the water discharge pipe 4. A connection method for the water intake pipe 3 and the pool water outlet 223 is also applicable to the connection between the water discharge pipe 4 and the pool water inlet 224 of the pool liner 22.

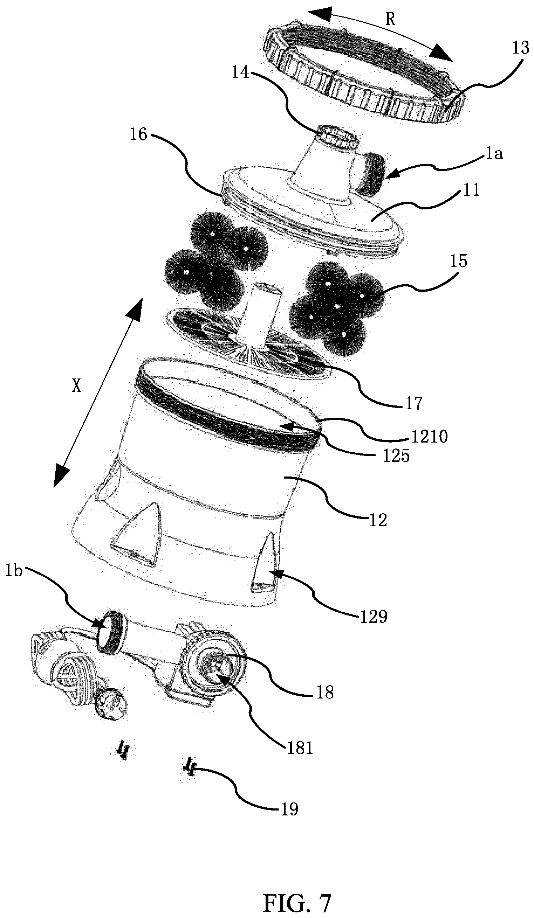

A filter pump 18 may be arranged inside the filter 1 (not shown in FIGS. 1 to 4, and refer to FIG. 7 described later). The water in the pool liner 22 flows into the filter 1 for filtration from the pool water outlet 223 through the water intake pipe 3, and under the action of the filter pump 18, the water filtered by the filter 1 flows back into the pool liner 22 from the pool water inlet 224 through the water discharge channel 1b and the water discharge pipe 4, so as to implement the circulating filtration of the water in the pool liner 22.

It should be noted that, according to safety regulations, in the example embodiment shown in FIG. 1, the lengths of the water intake pipe 3 and the water discharge pipe 4 may be at least 3 meters. The lengths of the water intake pipe 3 and the water discharge pipe 4 in one or more example embodiments may each be 3 meters, but are not limited thereto, for example, the lengths of the water intake pipe 3 and the water discharge pipe 4 may alternately be 4 meters or 5 meters, etc.

Referring to FIG. 1, a height of the pool water outlet 223 on the frame pool 2 may be less than a height of the pool water inlet 224 on the frame pool 2, which can allow the water in the pool liner 22 to enter the water intake pipe 3 smoothly; and it is possible to arrange the pool water outlet 223 to be always below a water level in order to prevent air from entering the filter 1 through the water intake pipe 3. Such a structural design may enable maintenance of a normal operation of the filter 1.

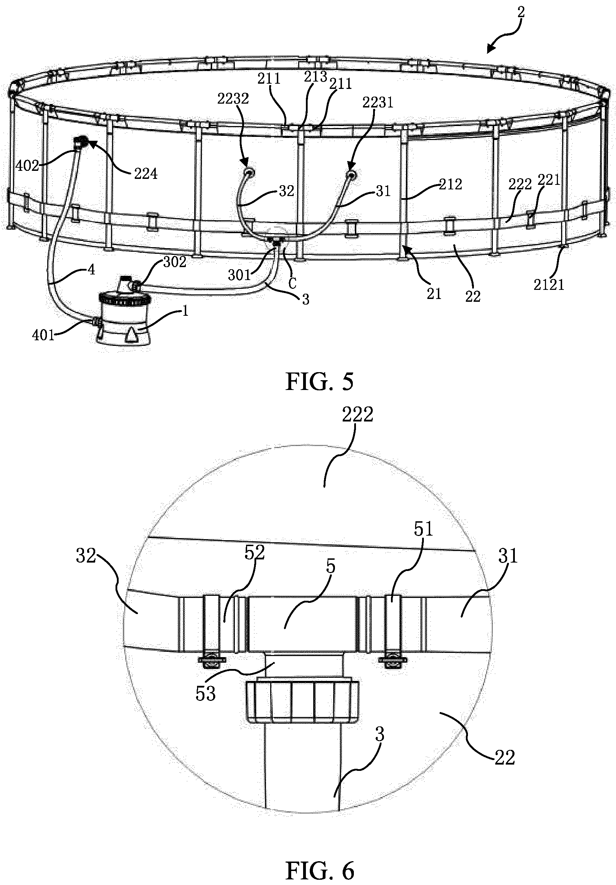

The first end 301 of the water intake pipe 3 shown in FIG. 1 and the pool water outlet 223 of the pool liner 22 are directly connected to the pool water outlet 223 by means of the connector 34. According to one or more alternate example embodiments, the first end 301 of the water intake pipe 3 may not be directly connected to the pool liner 22, but may be connected to two branch pipes by means of a tee pipe 5 (refer to FIG. 5 and FIG. 6), and the two branch pipes may then be connected to the pool liner 22 respectively.

Referring to FIG. 5 and in combination with FIG. 6, the pool liner 22 may be provided with a first pool water outlet 2231 and a second pool water outlet 2232. The tee pipe 5 is a T-shaped three-way pipe. The tee pipe 5 is connected to one end of each of the two branch pipes. For ease of description, the two branch pipes are described as a first branch pipe 31 and a second branch pipe 32 respectively. Specifically, the tee pipe 5 comprises a first connecting end 51, a second connecting end 52 and a third connecting end 53. A first end of the first branch pipe 31 is in fluid communication with the first connecting end 51, and a second end is in fluid communication with the first pool water outlet 2231. A first end of the second branch pipe 32 is in fluid communication with the second connecting end 52, and a second end is in fluid communication with the second pool water outlet 2232. A first end of the water intake pipe 3 is in fluid communication with the third connecting end 53.

It should be noted that, in the example embodiment solution shown in FIG. 5, the lengths of the first branch pipe 31 and the second branch pipe 32 are 1 meter, and the length of the water discharge pipe 4 is 1.5 meters. However, the lengths of the pipes are not limited thereto, for example, the lengths of the first branch pipe 31 and the second branch pipe 32 may alternately be 2 meters or 3 meters, etc., and the length of the water discharge pipe 4 may alternately be 2.5 meters or 3.5 meters, etc. In addition, according to safety regulations, a distance between the first pool water outlet 2231 and the second pool water outlet 2232 may be at least 1.1 meters. For example, a distance between the first pool water outlet 2231 and the second pool water outlet 2232 in one or more example embodiments described herein is 1.1 meters, but is not limited thereto, for example, it may alternately be 1.2 meters or 1.3 meters, etc.

The water in the pool liner 22 may enter the tee pipe 5 from the first connecting end 51 through the first branch pipe 31, enter the tee pipe 5 from the second connecting end 52 through the second branch pipe 32, and then flows into the water intake pipe 3 through the third connecting end 53 of the tee pipe 5 so as to flow into the filter 1 through the water intake pipe 3.

When the first pool water outlet 2231 is blocked by foreign matters, the water in the pool liner 22 can still flow into the filter 1 from the second pool water outlet 2232 through the second branch pipe 32 and the water intake pipe 3 so as to implement circulating filtration; alternatively, when the second pool water outlet 2232 is blocked by foreign matters, the water in the pool liner 22 can still flow into the filter 1 from the first pool water outlet 2231 through the first branch pipe 31 and the water intake pipe 3 so as to implement circulating filtration. In this way, the body of a user in the frame pool 2 can be prevented from being sucked at the pool water outlet of the pool liner 22, thereby contributing to the safety of the frame pool 2. Moreover, such a pipeline structure (comprising the tee pipe and the two branch pipes) may also aid in preventing excessive idling of the filter pump 18 (not shown in FIGS. 1 to 5) in the filter 1 due to insufficient water flowing through the filter 1, potentially prolonging the service life of the filter 1.

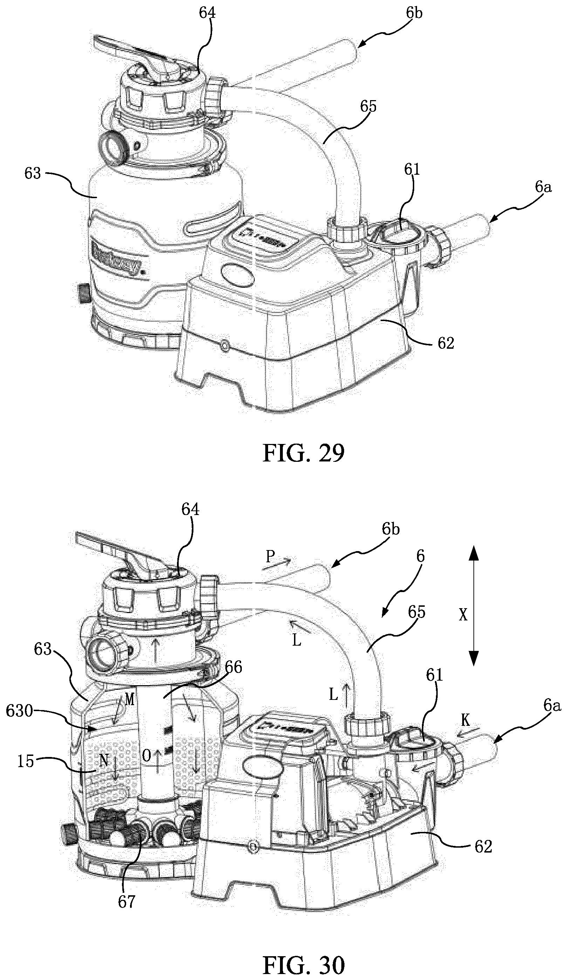

According to one example aspect, the filter 1 in this example embodiment may be replaced with a water filter 6 (shown in FIGS. 29 and 30). Specifically, the water filter 6 is provided with a water intake channel 5a and a water discharge channel 1b. The water intake channel 6a of the water filter 6 is in fluid communication with the pool water outlet 223 of the pool liner 22 by means of the water intake pipe 3, and the water discharge channel 6b of the water filter 6 is in fluid communication with the pool water inlet 224 of the pool liner 22 by means of the water discharge pipe 4.

The specific structure of the above-described filter 1 will be described in detail below in conjunction with the figures.

### Example Embodiment I

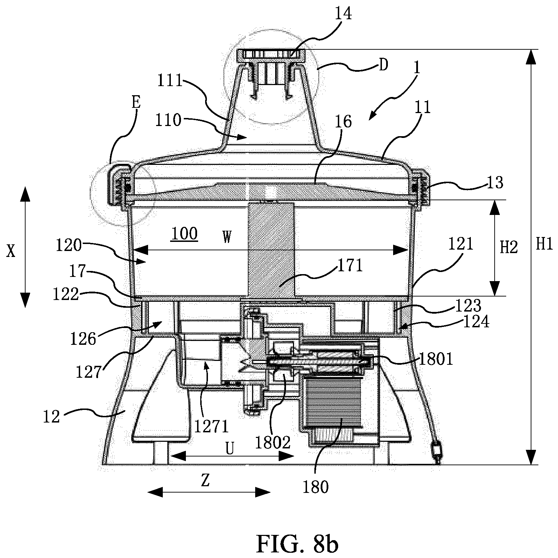

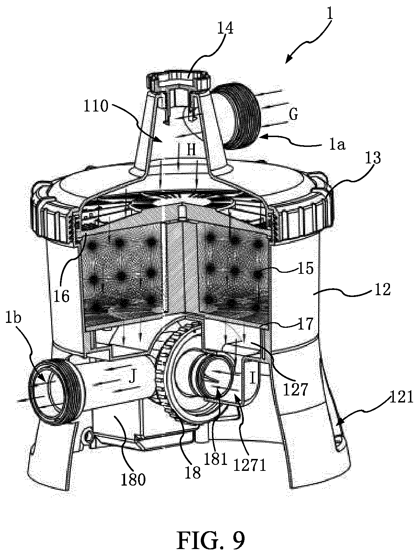

FIG. 2 shows a perspective view of the filter 1 according to an example embodiment, and FIG. 7 shows a schematic exploded structure diagram of the filter 1 according to an example embodiment; FIG. 8b shows a cross-sectional view of the filter 1 according to an example embodiment; FIG. 9 shows a schematic cross-sectional structure diagram of a water flow direction of the filter 1 according to an example embodiment.

Referring to FIG. 2 and FIGS. 7 to 9, the filter 1 comprises a cartridge cover 11 and a filter cartridge 12. The upper end of the filter cartridge 12 has an opening 125, and the cartridge cover 11 covers the opening 125 of the filter cartridge 12. The cartridge cover 11 and the filter cartridge 12 define a first chamber 10.

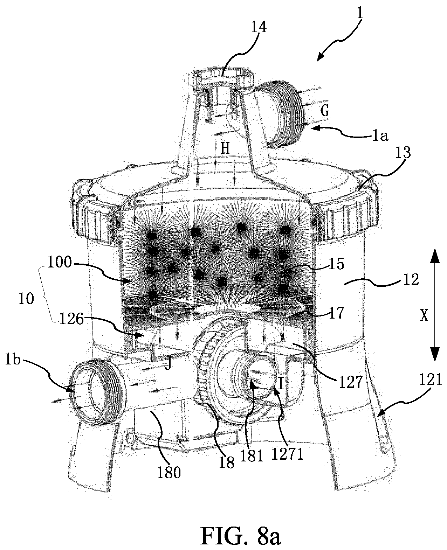

Referring to FIG. 8a, the first chamber 10 may comprise a filter chamber 100 and a transition chamber 126. For example, a partition plate 127 is arranged inside the filter cartridge 12, and a supporting component 17 is arranged inside the filter 1 and located between the cartridge cover 11 and the partition plate 127. In a vertical direction X, the supporting component 17 and the partition plate 127 define the transition chamber 126. Furthermore, in a vertical direction X, between the cartridge cover 11 and the supporting component 17 is defined the filter chamber 100. A filter medium is placed in the filter chamber 100 (the filter medium in the embodiment of the present application is a fiber filter material, such as fiber balls 15) to filter water flowing through the filter chamber 100. According to an example aspect, the filter medium may be fiber balls 15. The fiber balls 15 can filter the water flowing through the filter chamber 100.

Referring to FIG. 8b, the first chamber 10 may comprise a filter chamber 100 and a transition chamber 126. The difference from the above-mentioned example embodiment lies in that the filter chamber 100 further comprises a first filter chamber 110 and a second filter chamber 120. For example, the partition plate 127 may be arranged inside the filter cartridge 12. In the vertical direction X, a first water distribution sheet 16 and a supporting component 17 are arranged inside the filter 1 and located between the cartridge cover 11 and the partition plate 127. In a vertical direction X, the supporting component 17 and the partition plate 127 define the transition chamber 126. Moreover, in the vertical direction X, between the cartridge cover 11 and the first water distribution sheet 16 is defined the first filter chamber 110, and the first filter chamber 110 is configured to coarsely filter the water flowing into the filter 1 so as to intercept large-particle impurities. The supporting component 17 is arranged in a spaced manner below the first water distribution sheet 16 in the vertical direction X so as to define a second filter chamber 120 between the supporting component 17 and the first water distribution sheet 16 in the vertical direction X. In the vertical direction X, the second filter chamber 120 is located below the first filter chamber 110 and is in fluid communication with the first filter chamber 110. The fiber balls 15 are arranged in the second filter chamber 120 to further filter the water coarsely filtered in the first filter chamber 110 (that is, flowing through the first water distribution sheet 16).

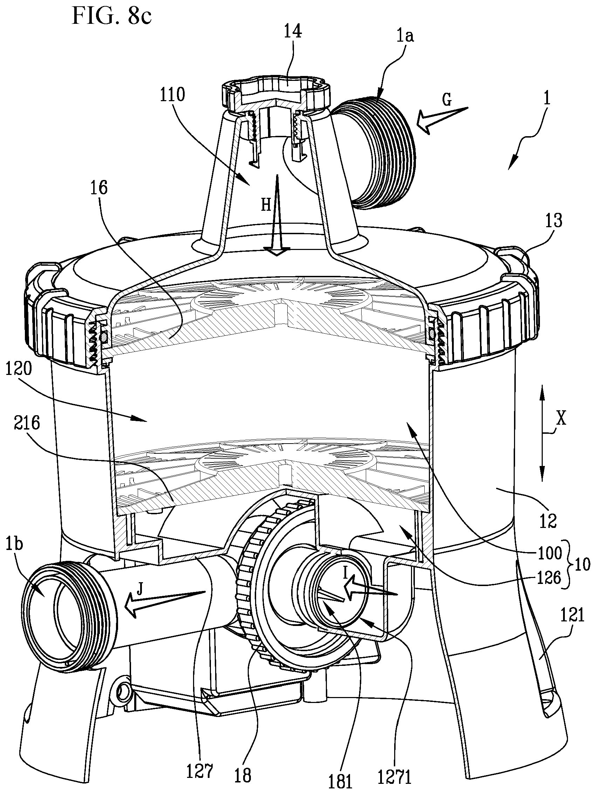

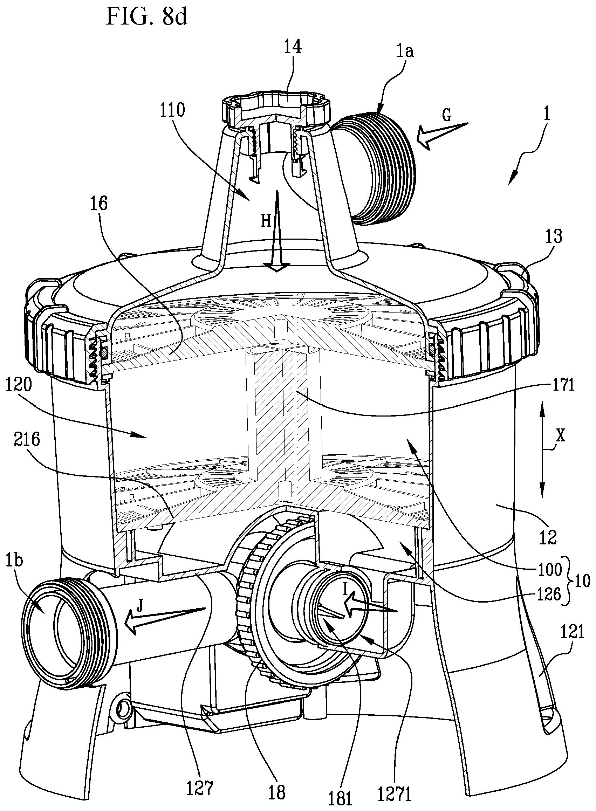

The embodiments shown in FIGS. 8c and 8d differ from the embodiment of FIG 8b in the fact that the embodiment of FIG 8c presents also a second water distribution sheet 216 in place of the supporting component 17, while the embodiment of FIG 8d has both a first water distribution sheet 16, a second water distribution sheet 216 and a protrusion post 171 extending upwards from the second water distribution sheet 216. In details, referring to FIG. 8c, the first chamber 10 may comprise a filter chamber 100 and a transition chamber 126; the filter chamber 100 further comprises a first filter chamber 110 and a second filter chamber 120. The difference from the above-mentioned example embodiment of FIG 8b lies in that there is a first water distribution sheet 16 at the top of the second filter chamber 120, and a second water distribution sheet 216 at the bottom of the second filter chamber 120, in the same position of and substituting the supporting component 17. For example, the partition plate 127 may be arranged inside the filter cartridge 12. In the vertical direction X, the first water distribution sheet 16 and the second water distribution sheet 216 are arranged inside the filter 1 and located between the cartridge cover 11 and the partition plate 127. In a vertical direction X, the second water distribution sheet 216 and the partition plate 127 define the transition chamber 126. Moreover, in the vertical direction X, between the cartridge cover 11 and the first water distribution sheet 16 is defined the first filter chamber 110, and the first filter chamber 110 is configured to coarsely filter the water flowing into the filter 1 so as to intercept large-particle impurities. The second water distribution sheet 216 is arranged in a spaced manner below the first water distribution sheet 16 in the vertical direction X so as to define a second filter chamber 120 between the second water distribution sheet 216 and the first water distribution sheet 16 in the vertical direction X. In the vertical direction X, the second filter chamber 120 is located below the first filter chamber 110 and is in fluid communication with the first filter chamber 110. The fiber balls 15 (not shown in FIG 8c) are arranged in the second filter chamber 120 to further filter the water coarsely filtered in the first filter chamber 110 (that is, flowing through the first water distribution sheet 16). Another difference between the embodiment of FIG 8b and the one of FIG 8c is that in the latter the protruding post 171 is absent.

Referring to FIG. 8d, the embodiment disclosed in this figure is the same as the one shown in FIG 8c and described above, with the only difference that in FIG 8d also a protruding post 171 is present. The protruding post 171 is located at a center position of the second water distribution sheet 216 and extends upward in the vertical direction X (that is, towards the first water distribution sheet 16). Referring to FIG. 8d, the protruding post 171 is located in the second filter chamber 120. The user can remove the second water distribution sheet 216 from the filter cartridge 12 by means of the protruding post 171 to replace the fiber balls 15, improving the convenience of use.

Referring to FIG. 2, FIG. 3, FIGS. 7 to 9, and FIGS. 11 to 13, a middle position of the cartridge cover 11 extends upward to form a hollow second boss 111. For example, the second boss 111 may be in the shape of an inverted cone. In a horizontal direction Y, the second boss 111 extends outward to define a water intake channel 1a, the water intake channel 1a is in communication with the interior of the second boss 111, and the water can enter the filter 1 through the water intake channel 1a. For example, an outer wall of the water intake channel 1a may be provided with an external thread, a second end of the water intake pipe 3 is provided with a first connector 33, the first connector 33 is provided with an internal thread, and the first connector 33 is in thread fit with the outer wall of the water intake channel 1a, such that the water intake pipe 3 is in communication with the water intake channel 1a, and mounting is simple and convenient.

A connection method between the water intake channel 1a and the first connector 33 is not limited, as long as the water intake channel 1a and the first connector 33 can be stably connected and the water can be allowed to flow into the filter 1 from the pool liner 22.

For example, referring to FIG. 3 and in combination with FIG. 9, a first end of the water discharge pipe 4 (that is, the end of the water discharge pipe 4 connected to the filter 1) is provided with a second connector 41, and the water discharge pipe 4 is in fluid communication with the water discharge channel 1b by means of the second connector 41. Specifically, an outer wall of the water discharge channel 1b is provided with an external thread, an inner wall of the second connector 41 is provided with an internal thread (not shown), and the second connector 41 is in thread fit with the water discharge channel 1b, such that the water discharge channel 1b is connected to the water discharge pipe 4.

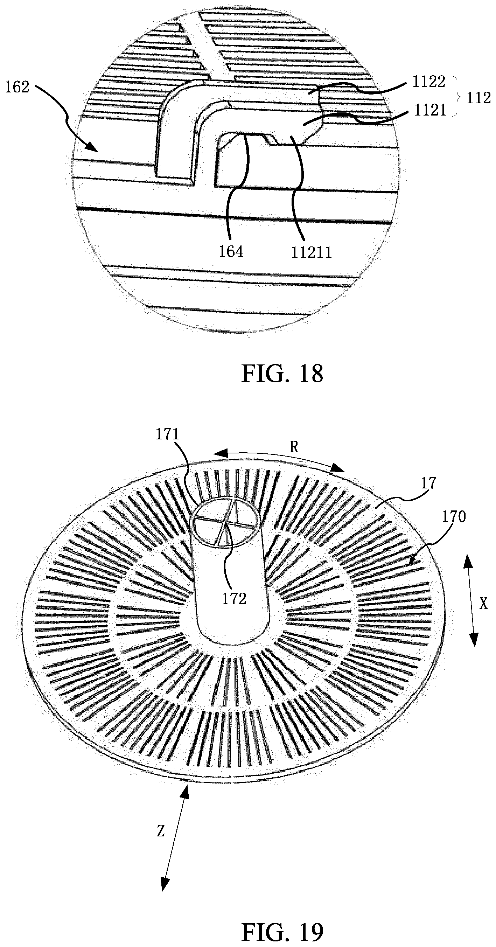

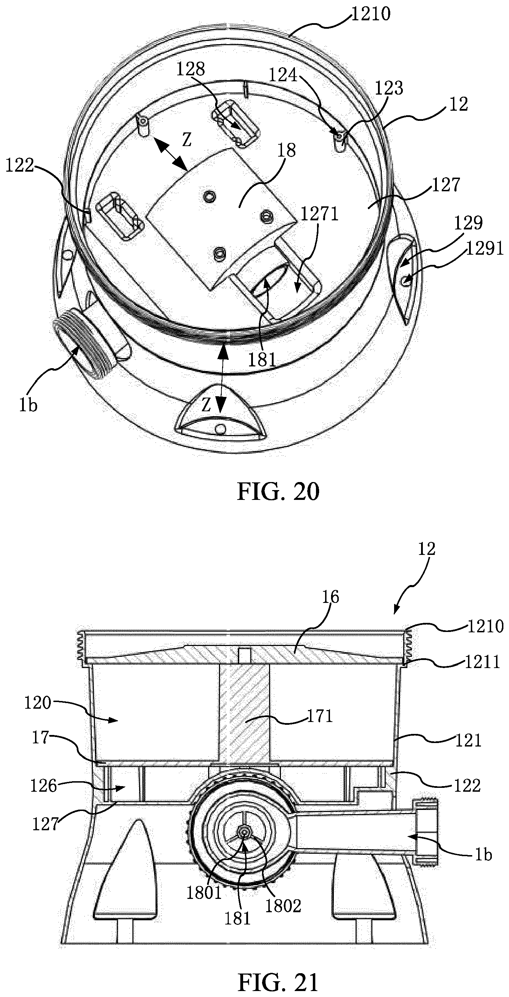

Referring to FIGS. 8b and 9 and in combination with FIGS. 19 and 20, in the vertical direction X, the partition plate 127 of the filter cartridge 12 is arranged in a spaced manner below the supporting component 17 and integrated with a side wall of the filter cartridge 12. After the supporting component 17 is assembled inside the filter cartridge 12, the partition plate 127 and the supporting component 17 define the transition chamber 126 in order to prevent the fiber balls 15 from blocking a filter pump water inlet 1271. After being filtered by the first filter chamber 110 and the fiber balls 15, the water converges and flows into the transition chamber 126, and under the action of the filter pump 18 arranged below the partition plate 127, the water is pumped into the filter pump 18 and flows out of the filter 1 through the water discharge channel 1b.

The filter pump 18 is arranged below the partition plate 127 in the vertical direction X, and the position of the partition plate 127 corresponding to the filter pump 18 protrudes upward in the vertical direction X so as to avoid the filter pump 18. The filter pump 18 comprises a filter pump water intake channel 181 and the water discharge channel 1b. The position of the partition plate 127 close to the filter pump water intake channel 181 of the filter pump 18 is recessed downward in the vertical direction X to form a filter pump water inlet 1271. The filter pump water inlet 1271 is in fluid communication with the filter pump water intake channel 181. After the water filtered by the fiber balls 15 enters the transition chamber 126, it converges to the filter pump water inlet 1271 and enters the filter pump 18 through the filter pump water intake channel 181. The water discharge channel 1b of the filter pump 18 is in fluid communication with the water discharge pipe 4 (shown in FIG. 3), and after entering the filter pump 18, the water enters the water discharge pipe 4 from the water discharge channel 1b so as to flow back into the frame pool 2, completing circulating filtration.

Referring to FIGS. 7 to 9 and in combination with FIG. 20, the filter pump 18 may further comprise an electric motor 180, the electric motor 180 is provided with a rotating shaft 1801, the rotating shaft 1801 extends in an axial direction U of the filter pump water intake channel 181, the rotating shaft 1801 is sleeved with blades 1802, and the blades 1802 are located at a connection between the filter pump water intake channel 181 and the water discharge channel 1b. The electric motor 180 can drive the rotating shaft 1801 to rotate so as to drive the blades 1802 to rotate, and the blades 1802 drive the water in the filter pump water intake channel 181 to leave the filter pump 18 from the water discharge channel 1b.

Referring to FIG. 9 and in combination with FIGS. 3 and 8b, after flowing into the water intake channel 1a of the filter 1 through the water intake pipe 3, the water flows out of the filter 1 sequentially in a direction G, a direction H, a direction I and a direction J and enters the water discharge pipe 4. Specifically, in the direction G, the water flows into the first filter chamber 110 from the water intake pipe 3 through the water intake channel 1a. Then, in the direction H, the water enters the second filter chamber 120 through the first water distribution sheet 16, and large-particle impurities are filtered in this process. After entering the second filter chamber 120, the water flowing into the second filter chamber 120 is filtered by the fiber balls 15, and the water filtered by the fiber balls 15 continues to flow into the transition chamber 126 by means of the supporting component 17 in the direction H. The water flowing into the transition chamber 126 flows into the filter pump 18 in a direction I, and enters, under the action of the filter pump 18, the water discharge pipe 4 through the water discharge channel 1b in a direction J. In this way, the filtration of the water is achieved.

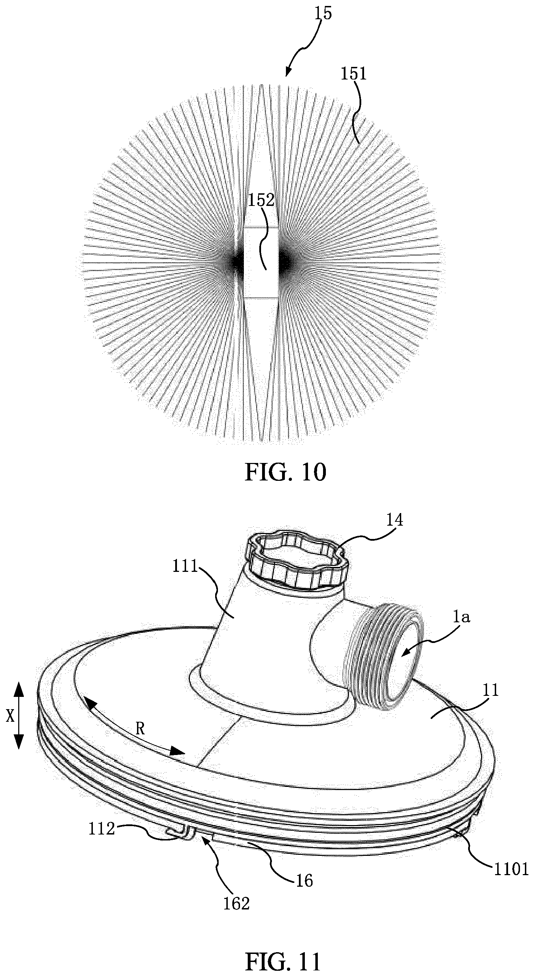

Referring to FIG. 10 and in combination with FIGS. 8b and 9, the fiber ball 15 is composed of a plurality of fiber filaments 151, and the center of a spherical body of the fiber ball 15 is provided with a fixing member 152 (such as a rope or a fiber bundle), in order to bind the plurality of fiber filaments 151 to form a ball. The number of the fiber balls 15 is not limited, and as the volume of the filter cartridge 12 of the filter 1 changes, the number of the fiber balls 15 arranged in the filter cartridge 12 may increase or decrease accordingly. With regard to the arrangement of the fiber balls 15 in the second filter chamber 120, the fiber balls 15 may be arranged in the second filter chamber 120 without a special arrangement manner (that is, in a random arrangement manner). The arrangement manner of the fiber balls 15 is not limited, and according to one or more example aspects, the fiber balls 15 may be regularly stacked with each other. For example, a gap is formed by every four adjacent fiber balls 15, and one fiber ball 15 is placed in each gap, such that the plurality of fiber balls 15 are stacked with each other in such a manner to fill the entire second filter chamber 120.

The fiber balls 15 may provide fine and abundant fiber fluffs, a single material, low costs and a simple process. According to one or more example embodiments, a plurality of fiber balls 15 are arranged in the second filter chamber 120, such that the fiber fluffs of the plurality of fiber balls 15 are tightly intertwined together, the filtering effect may be improved, and the maintenance cost may be reduced.

Continuing to refer to FIG. 9 and in combination with FIG. 8b, according to an example embodiment, the filter 1 may have a capacity of 1500 GAL, the filter 1 may have a height H1 of 360 millimeters, the second filter chamber 120 may have a height H2 (that is, a distance between a first water distribution sheet 16 and a second water distribution sheet 216/supporting component 17 in the vertical direction, in other words a distance between a first water distribution sheet 16 and a second water distribution sheet 216 or a distance between a first water distribution sheet 16 and a supporting component 17 positioned in place of the second water distribution sheet 216) of 83 millimeters, and the second filter chamber 120 may have a diameter W (that is, the diameter of the second water distribution sheet 216 or alternatively of the supporting component 17) of 242 millimeters. However, these numerical values are not limiting. When the capacity of the filter 1 is another numerical value, the height H1 of the filter 1, the height H2 of the second filter chamber 120 and the diameter W of the second filter chamber 120 may also be adjusted accordingly.

For example, a volume of the plurality of fiber balls 15 in the filter cartridge 12 may account for 55% of the volume of the filter cartridge 12, but it is not limited thereto. In other possible implementations, the volume of the plurality of fiber balls 15 in the filter cartridge 12 accounting for the volume of the filter cartridge 12 may be any one proportion ranging from 40% to 60%, including 40%, 41%, 44%, 45%, 46%, 50%, 54%, 56%, 59%, 60%, etc. The mass of each fiber ball 15 may be any one of 3 g to 5 g, for example, 3 g, 4 g, 5 g, etc. The total mass of the plurality of fiber balls 15 may be any one of 200 g to 1000 g, for example, 200 g, 250 g, 560 g, 700 g, 800 g, 1000 g, etc. The filtration efficiency of the fiber balls 15 may be about 70% to 75%. The density of the fiber balls 15 may be about 1.38 g/cm³, and the specific surface area of the fiber balls 15 may be about 3000 m²/m³. The fiber ball 15 has a diameter ranging from 50 mm to 60 mm.

The specific shape of the fiber filter material is not limited. That is to say, the fiber filter material need not take the form of fiber balls 15. For example, according to one or more example aspects, the fiber filter material may be a bundled fiber filter material (not shown).

According to one or more example aspects, the cartridge cover 11 is provided with a transparent portion (not shown) which is configured to enable observation of contamination inside the filter cartridge 12, so that a user can replace and clean the fiber balls 15 in a timely manner. The area of the transparent portion is not limited. For example, the cartridge cover 11 may be fully transparent, that is, the cartridge cover 11 may not be provided with a non-transparent portion. In some other possible implementations, the cartridge cover 11 and the filter cartridge 12 of the entire filter 1 may be made of a transparent material, so as to enable more convenient viewing of the usage of the fiber balls 15 in the filter cartridge 12.

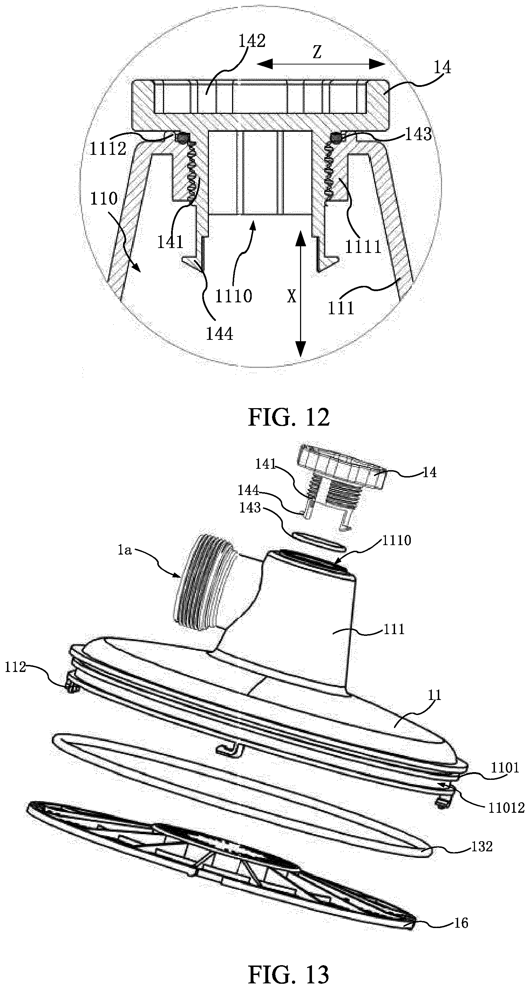

For example, referring to FIG. 12 and in combination with FIG. 13, an opening may be arranged at the upper end of the second boss 111 to form an exhaust port 1110. In the vertical direction X, an edge of the exhaust port 1110 extends towards the interior of the second boss 111 to form a first connecting portion 1111, and the first connecting portion 1111 is provided with an internal thread.

For example, with continued reference to FIG. 12, the filter 1 may further comprise an exhaust valve 14. The exhaust valve 14 is provided with a second connecting portion 141 and a screwing portion 142, the second connecting portion 141 is provided with an external thread, and the first connecting portion 1111 is in thread fit with the second connecting portion 141 such that the exhaust valve 14 is secured at the exhaust port 1110 to facilitate mounting by the user. The air in the filter 1 can be discharged by means of the exhaust valve 14, such that the water in the pool liner 22 (shown in FIG. 1) flows into the filter 1 through the water intake pipe 3 (shown in FIG. 1).

A connection method for the exhaust valve 14 and the exhaust port 1110 is not limited, as long as the exhaust valve 14 can be secured to the exhaust port 1110, and when air exhausting is required, the air can be discharged from the filter 1 through the exhaust port 1110.

For example, with continued reference to FIG. 12, in the vertical direction X, a peripheral side of the exhaust port 1110 protrudes upward to form an annular first protruding portion 1112, and a first sealing ring 143 is arranged between the first protruding portion 1112 and the second connecting portion 141 to prevent the water from overflowing from the exhaust port 1110 during operation of the filter 1.

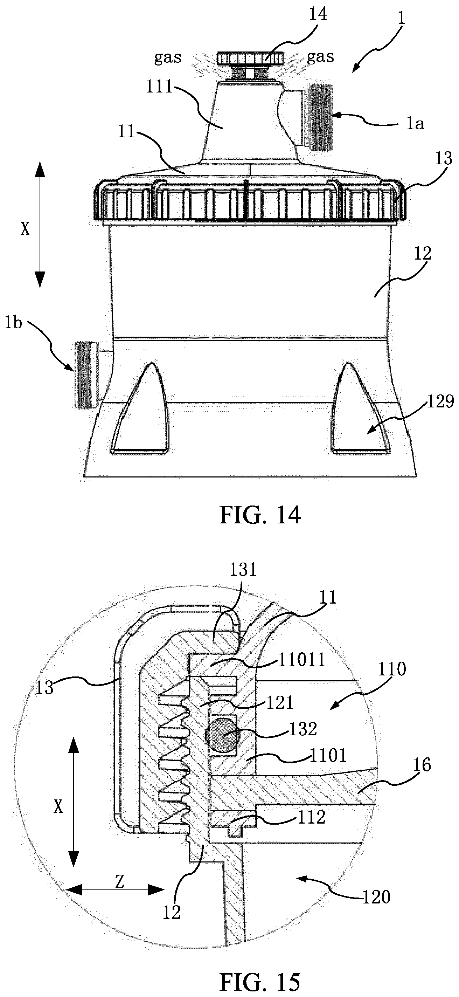

For example, in the vertical direction X, a third hook 144 is arranged at the bottom of the second connecting portion 141, and the third hook 144 is elastic. When the exhaust valve 14 is mounted, the third hook 144 first extends, in the vertical direction X, into the exhaust port 1110 in a manner of being compressed inward in a radial direction Z, and the third hook 144 is then released, such that the third hook 144 snaps back and abuts against the bottom of the first connecting portion 1111, and then the exhaust valve 14 is moved downward in the vertical direction X by forwardly rotating the screwing portion 142 until the exhaust valve 14 seals the exhaust port 1110. Referring to FIG. 14 and in combination with FIG. 12, when air exhausting is desired, the exhaust valve 14 is moved upward in the vertical direction X by reversely rotating the screwing portion 142, and the air inside the filter 1 can be exhausted through a gap between the first connecting portion 1111 and the second connecting portion 141. An exhaust state of the filter 1 is shown in FIG. 14. A function of the third hook 144 lies in securing the exhaust valve 14 at the exhaust port 1110 when the filter 1 is in the exhaust state, and enabling the exhaust valve 14 to be completely screwed out from the exhaust port 1110 during air exhausting, and the third hook 144 can prevent the exhaust valve 14 from being removed and lost from the exhaust port 1110.

Referring to FIG. 11, in a circumferential direction R, an edge of the cartridge cover 11 extends downward in the vertical direction X to form a cartridge cover side wall 1101. In some possible implementations, referring to FIG. 15, the upper end of the cartridge cover side wall 1101 extends outward in the radial direction Z to form an annular fourth flange 11011. When the cartridge cover 11 is mounted on the filter cartridge 12, the fourth flange 11011 is pressed against the upper end 1210 of the side wall 121 of the filter cartridge, and the remaining portion of the cartridge cover side wall 1101 except for the fourth flange 11011 is located inside the filter cartridge 12.

Referring to FIG. 15 and in combination with FIGS. 7 to 9, the cartridge cover 11 and the filter cartridge 12 are secured by means of a cartridge cover fastener 13. For example, the cartridge cover fastener 13 is an annular component. The cartridge cover fastener 13 is provided with an internal thread, and the upper portion of the side wall 121 of the filter cartridge is provided with an external thread. In the radial direction Z, the upper end of the cartridge cover fastener 13 extends towards the center of the cartridge cover 11 to form an annular third flange 131 cooperating with the fourth flange 11011.

When the cartridge cover 11 is mounted, the cartridge cover side wall 1101 first extends into the filter cartridge 12 until the fourth flange 11011 is in contact with the upper end 1210 of the side wall 121 of the filter cartridge, and the internal thread of the cartridge cover fastener 13 matches the external thread of the side wall 121 of the filter cartridge, such that the cartridge cover fastener 13 is moved downward in the vertical direction X until the third flange 131 abuts against the fourth flange 11011. The mounting is simple and convenient. When the cartridge cover 11 is mounted on the filter cartridge 12, in the vertical direction X, the fourth flange 11011 is located between the third flange 131 and the side wall 121 of the filter cartridge.

A securing method for the cartridge cover 11 and the filter cartridge 12 is not limited, as long as the cartridge cover 11 and the filter cartridge 12 can be firmly connected, and water can be prevented from overflowing from a connection between the cartridge cover 11 and the filter cartridge 12.

With continued reference to FIG. 15 and in combination with FIGS. 11 and 13, in the circumferential direction R, the cartridge cover side wall 1101 is provided with an annular groove 11012, and the annular groove 11012 is configured to accommodate a second sealing ring 132. After the cartridge cover 11 is secured to the filter cartridge 12, the second sealing ring 132 abuts against inner surfaces of the annular groove 11012 and the side wall 121 of the filter cartridge respectively, so as to prevent the water from overflowing from the connection between the cartridge cover 11 and the filter cartridge 12.

In some possible implementations, referring to FIGS 7 to 9, FIGS. 11 and 13, and FIGS. 16 to 18, in the vertical direction X, the first water distribution sheet 16 may be detachably secured to the bottom of the cartridge cover side wall 1101, that is, the first water distribution sheet 16 is detachably connected to the cartridge cover 11. In the vertical direction X, the cartridge cover 11 and the first water distribution sheet 16 form the above-mentioned first filter chamber 110.

For example, a center position of the first water distribution sheet 16 extends upward in the vertical direction X to form a first boss 161. In the vertical direction X, the first boss 161 is greater than the remaining portion of the first water distribution sheet 16 in height. When the water flows towards the first water distribution sheet 16, the first boss 161 can disperse the water in the radial direction Z and make the water substantially uniformly flow into the second filter chamber 120, so as to prevent the situation that the water enters the second filter chamber 120 from the same position, causing the fiber ball 15 at a certain position in the second filter chamber 120 to be sunken compared with the fiber balls 15 at other positions due to the impact of excessive water, thus affecting the filtration quality.

For example, in the circumferential direction R, four first grooves 162 are arranged in an edge of the first water distribution sheet 16. In the circumferential direction R, the four first grooves 162 are arranged at intervals. The edge of the first water distribution sheet 16 protrudes, at a position close to each first groove 162, in the vertical direction X in a direction away from the first boss 161 (that is, towards the supporting component 17), to form a first bump 164 (as shown in FIGS. 15, 17 and 18). That is to say, in the vertical direction X, four first bumps 164 are arranged on the side of the first water distribution sheet 16 opposite to the first boss 161, and each first bump 164 is close to an edge of the first groove 162 in the circumferential direction R.

Correspondingly, four first hooks 112 are respectively arranged at the positions, corresponding to the four first grooves 162 of the first water distribution sheet 16, of the bottom of the cartridge cover side wall 1101. Each first hook 112 comprises a first hook handle 1121 and a first reinforcing rib portion 1122 that are integrally formed, and the first reinforcing rib portion 1122 is located on one side surface of the first hook handle 1121 (see FIG. 18). In the vertical direction X, the other side surface of the first hook handle 1121 protrudes in a direction away from the first reinforcing rib portion 1122 to form a second bump 11211, that is to say, the first reinforcing rib portion 1122 and the second bump 11211 are arranged opposite to each other. The second bump 11211 engages with the first bump 164 to detachably secure the cartridge cover 11 and the first water distribution sheet 16. The first reinforcing rib portion 1122 can improve the structural strength of the first hook 112.

During mounting, each first hook 112 first extends into one first groove 162 in the vertical direction X, and the cartridge cover 11 is then rotated relative to the first water distribution sheet 16, such that the second bump 11211 of each first hook 112 passes over the first bump 164 in the circumferential direction R to limit the cartridge cover 11 and the first water distribution sheet 16 in the circumferential direction R and the vertical direction X.

The number of the first hooks 112 and the number of the first grooves 162 are not limited. For example, the number of the first hooks 112 and the first grooves 162 may be any number, including, but not limited to five, six, seven, or more.

With the above technical solution, by means of the cooperation between the first grooves 162 and the first hooks 112, the first water distribution sheet 16 and the cartridge cover 11 are secured together. That is to say, before the cartridge cover 11 and the filter cartridge 12 are mounted, the first water distribution sheet 16 is first secured to the bottom of the cartridge cover 11. The mounting difficulty of the first water distribution sheet 16 can be reduced, and the first water distribution sheet 16 can be mounted more conveniently.

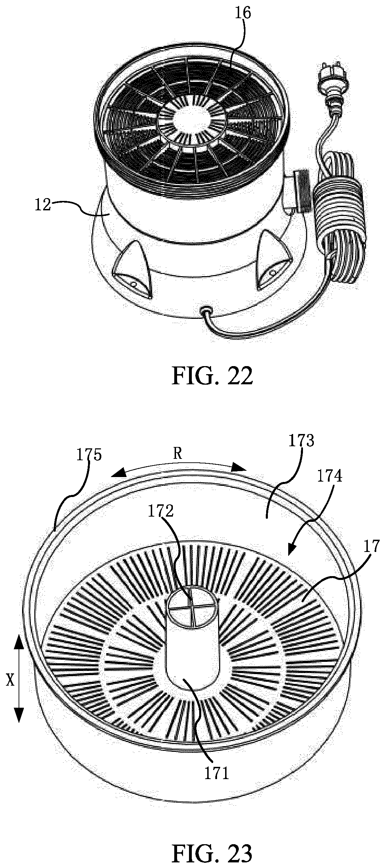

Referring to FIGS. 21 and 22, according to one or more example aspects, different from a connection structure between the first water distribution sheet 16 and the cartridge cover 11 as described above, the first water distribution sheet 16 is not connected to the bottom of the cartridge cover 11, but the first water distribution sheet 16 is directly separately placed on a step 1211 formed by the upper end 1210 of the side wall 121 of the filter cartridge.

After the cartridge cover 11 and the filter cartridge 12 are mounted, the first water distribution sheet 16 can compress the fiber balls 15 in the second filter chamber 120, such that rough fluff surfaces of the plurality of fiber balls 15 are attached to each other, preventing the fiber balls 15 from being flushed away by the water, and improving the filtering effect.

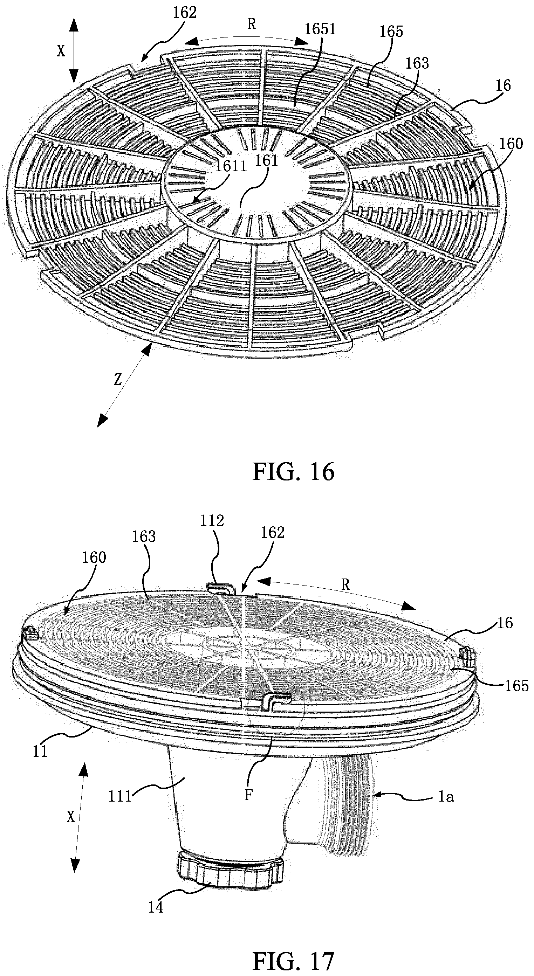

According to one or more example aspects, referring to FIGS. 7 to 9, FIG. 11, FIG. 13, and FIGS. 16 to 18, the first water distribution sheet 16 is provided with sixteen first ribs 163 at intervals (as shown in FIG. 16), and each first rib 163 extends from the first boss 161 to the edge of the first water distribution sheet 16 in the radial direction Z. Moreover, the height of each first rib 163 decreases gradually in the radial direction Z from the first boss 161 to the edge of the first water distribution sheet 16, such that a side surface of the first rib 163 is roughly in a triangular shape to prevent the first ribs 163 from hindering the uniform dispersion of water. The sixteen first ribs 163 are distributed on the first water distribution sheet 16 in the circumferential direction R. The first ribs 163 can improve the structural strength of the first water distribution sheet 16.

The number of the first ribs 163 is not limited. For example, the number of the first ribs 163 may be any number including, but not limited to eighteen, twenty, etc.

For example, the first water distribution sheet 16 is arranged in the form of a grid-shaped disk to disperse the water flowing through the first water distribution sheet 16 conveniently. Specifically, in the circumferential direction R, thirteen second ribs 165 are arranged between every two adjacent first ribs 163, and each second rib 165 extends in the circumferential direction R, that is, the shape of the second rib 165 is an arc shape extending in the circumferential direction R. In addition, two ends of each second rib 165 are respectively connected to two adjacent first ribs 163. From the first boss 161 to the edge of the first water distribution sheet 16 in the radial direction Z, the length of the second rib 165 increases gradually in the circumferential direction R. Moreover, a first reinforcing rib 1651 is arranged at a middle position from the first boss 161 to the edge of the first water distribution sheet 16 in the radial direction Z. In the vertical direction X, the first reinforcing ribs 1651 are greater than the second ribs 165 in height, and the first reinforcing ribs 1651 can improve the structural strength of the first water distribution sheet 16. For example, in the radial direction Z, there is a gap respectively between every two adjacent second ribs 165 and between the two first ribs 163 located at two ends of the two second ribs 165 in the circumferential direction R, so as to define an arc-shaped second through hole 160, and each second through hole 160 extends in the circumferential direction R. Each second through hole 160 runs through the first water distribution sheet 16 in the vertical direction X. The shape of the second through hole 160 is not limited. For example, the second through hole 160 may be in any of a variety of other shapes such as, but not limited to, a circular shape and an elongated shape.

The number of the second ribs 165 is not limited. For example, the number of the second ribs 165 may be any number including, but not limited to fourteen, fifteen, etc. The number of first reinforcing ribs 1651 are also not limited. For example, the number of the first reinforcing ribs 1651 may be any number including, but not limited to, two, three, etc.

Continuing to refer to FIG. 16, the first boss 161 is provided with twenty-eight first through holes 1611 extending in the radial direction Z, and each first through hole 1611 runs through the first boss 161 in the vertical direction X. For example, the twenty-eight first through holes 1611 are divided into seven groups each including four first through holes 1611, and the seven groups of first through holes 1611 are distributed on the first boss 161 in the circumferential direction R. The first through hole 1611 is elongated, but the shape of the first through hole 1611 is not limited. It may take any of a variety of other shapes including, but not limited to circular, arc-shaped, and other shapes. The number of the first through holes 1611 is not limited. For example, it may be any number including, but no limited to, twenty-nine, thirty, thirty-two, etc.

Referring to FIG. 2, FIG. 8b and FIG. 9 and in combination with FIG. 16, the water flows into the first filter chamber 110 through the water intake channel 1a and then flows to the first boss 161. Part of the water flows into the second filter chamber 120 from the first through holes 1611 in the first boss 161, and the rest of the water flows in a direction away from the first boss 161 in the radial direction Z, and flows into the second filter chamber 120 through a plurality of second through holes 160. The first boss 161 can effectively prevent the situation that the water enters the second filter chamber 120 from the same position, causing the fiber ball 15 at a certain position in the second filter chamber 120 to be sunken compared with the fiber balls 15 at other positions due to the impact of excessive water, thus affecting the filtration quality. Furthermore, the first through holes 1611 and the second through holes 160 can roughly filter the water and intercept large-particle impurities in the water, improving the filtering effect.

For example, referring to FIG. 8b and in combination with FIG. 17, the bottom portion of the first boss 161 is hollowed out to form a hollow structure, so that the weight of the first water distribution sheet 16 can be effectively decreased. According to one or more other example aspects, the first boss 161 may have a solid structure, or may have a structure that is partially solid and partially hollow, which is not limited.

For example, referring to FIG. 8b and in combination with FIG. 20, an inner surface of the side wall 121 of the filter cartridge 12 is provided with a second flange 122, and the second flange 122 is configured to place the supporting component 17. According to one or more other example aspects, the second flange 122 is a continuous annular flange and surrounds the inner surface of the side wall 121 of the filter cartridge 12. According to one or more other example aspects, the second flange 122 is discontinuous, that is, a plurality of second flanges 122 (For example, four second flanges 122 are shown in FIG. 8b) are provided. The number of the second flanges is not limited, as long as the second flanges 122 can support the supporting component 17.

According to one or more other example aspects, referring to FIG. 8b and in combination with FIG. 20, in the radial direction Z, each second flange 122 or part of the second flange 122 is provided with a cylinder 123 extending in the vertical direction X, at the end away from the side wall 121 of the filter cartridge, the cylinder 123 is provided with a screw hole 124 extending in the vertical direction X, and the supporting component 17 is secured to the second flange 122 by means of the screw hole 124.

With continued reference to FIG. 19 and in combination with FIGS. 8b and 9, the supporting component 17 is provided with a plurality of third through holes 170 extending in the radial direction Z, and each third through hole 170 runs through the supporting component 17 in the vertical direction X. The plurality of third through holes 170 are configured to allow the water filtered by the fiber balls 15 to flow from the second filter chamber 120 to the transition chamber 126 arranged below the supporting component 17, and prevent the fiber balls 15 and fibers of the fiber balls 15 from entering the filter pump 18 to affect the operation of the filter pump 18.

Referring to FIG. 19, the plurality of third through holes 170 are distributed in the radial direction Z to form a group of third through holes 170, and each third through hole 170 extends in the radial direction Z. In the circumferential direction R, a plurality of groups of third through holes 170 are distributed in the supporting component 17. The shape of the third through holes 170 is not limited. For example, each third through hole 170 may extend in an elongated shape in the radial direction Z. According to one or more other example aspects, the third through holes 170 may take any of a variety of other shapes including, but not limited to arc-shaped, circular, and other shapes. When the third through holes 170 are arc-shaped, each third through hole 170 extends in the circumferential direction R (not shown). The number of the third through holes 170 is also not limited.

With continued reference to FIG. 19, the above-mentioned supporting component 17 is further provided with a protruding post 171, the protruding post 171 is located at a center position of the supporting component 17, and the protruding post 171 extends upward in the vertical direction X (that is, towards the first water distribution sheet 16). Referring to FIG. 8b and in combination with FIG. 9, the protruding post 171 is located in the second filter chamber 120. The user can remove the supporting component 17 from the filter cartridge 12 by means of the protruding post 171 to replace the fiber balls 15, improving the convenience of use. The protruding post 171 may be located in the center position of the supporting component 17, and the plurality of third through holes 170 may be arranged around the protruding post 171. However, a specific position of the protruding post 171 on the supporting component 17 is not limited, as long as the user can remove the supporting component 17 by means of the protruding post 171. With continued reference to FIG. 19, according to one or more other example aspects, the protruding post 171 is hollow inside to decrease the weight of the supporting component 17. For example, a cross-shaped rib 172 may be arranged inside the protruding post 171 to enhance the structural strength of the protruding post 171. According to one or more other example aspects, the protruding post 171 may also be solid, which is not limited.

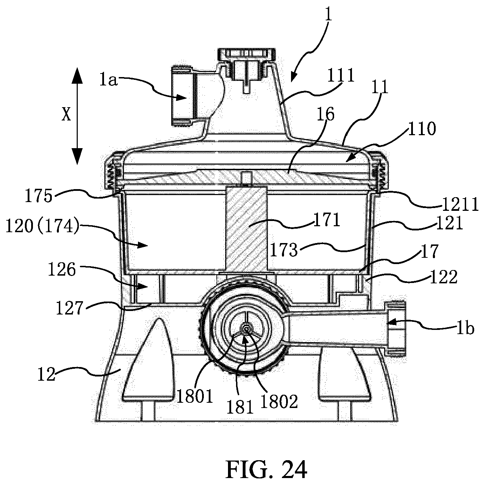

According to one or more other example aspects, referring to FIGS. 23 and 24, the supporting component 17 shown therein is different from the supporting component 17 shown in FIGS. 19 and 21, and in the circumferential direction R, the edge of the supporting component 17 extends upward in the vertical direction X to form a side wall 173 of the supporting component, such that the side wall 173 of the supporting component, the supporting component 17 and the first water distribution sheet 16 form an accommodating chamber 174 for accommodating the fiber balls 15 (not shown in FIGS. 23 and 24), that is to say, in the example shown in FIGS. 23 and 24, the accommodating chamber 174 is the second filter chamber 120. The side wall 173 of the supporting component may be hollowed out. When the supporting component 17 is removed from the filter cartridge 12 or is put back into the filter cartridge 12 by means of the protruding post 171, the side wall 173 of the supporting component 17 can prevent the fiber balls 15 in the accommodating chamber 174 from being scattered.

For example, in the circumferential direction R, the edge of the side wall 173 of the supporting component (that is, an edge of the upper end of the side wall) extends away from the protruding post 171 to form an annular first flange 175, and the first flange 175 cooperates with the step 1211 formed by the upper end 1210 of the side wall 121 of the filter cartridge to limit the supporting component 17 in the vertical direction X, such that the supporting component 17 is arranged in the filter cartridge 12.

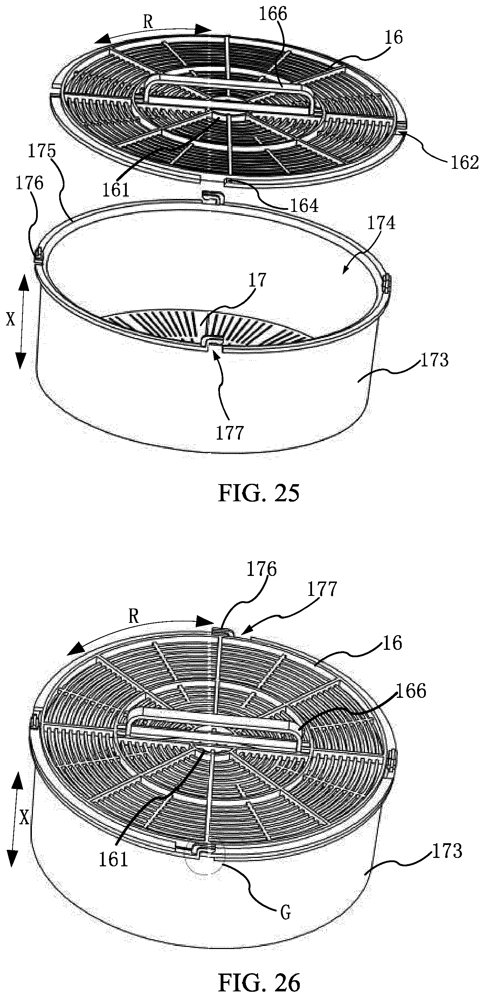

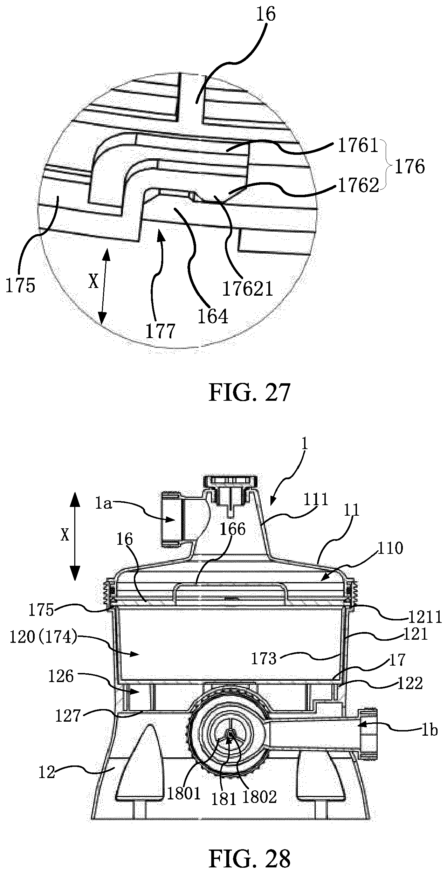

According to one or more other example aspects, referring to FIGS. 25 to 28, the supporting component 17, the first water distribution sheet 16 and a connection structure therebetween shown in the figures may be different from the corresponding components and their connection structures (as shown in FIGS. 7-19, FIGS. 21 and 22, and FIGS. 23 and 24) in the above-described example embodiments. Specifically, main differences lie in that the supporting component 17 in FIGS. 25-28 is detachably connected to the first water distribution sheet 16, and no protruding post 171 is arranged at the center of the supporting component 17. Moreover, the first bump 164 and the first boss 161 on the first water distribution sheet 16 are located on the same side of the first water distribution sheet 16 in the vertical direction X.

For example, in the circumferential direction R, four second hooks 176 are arranged on the side of the first flange 175 away from the supporting component 17 in the X direction. The number of the second hooks 176 is not limited, for example, it may any number including, but not limited to five, six, etc. Each second hook 176 extends in the circumferential direction R, is arranged on an edge of a respective second groove 177 mentioned below, and corresponds to the positions of the first groove and the second groove. Indeed, the plurality of second hooks 176 is disposed, at positions along the upper end of the side wall 173 of the supporting component 17 corresponding to positions of the plurality of first grooves 162 along the edge of the first water distribution sheet 16. The plurality of second grooves 177 are spaced along an upper end of the side wall 173 extending upward along an edge of the supporting component 17. Each second hook 176 comprises a second reinforcing rib portion 1761 and a second hook handle 1762 that are integrally formed, and the second reinforcing rib portion 1761 is located on one side surface of the second hook handle 1762 in the vertical direction X. In the vertical direction X, the other side surface of the second hook handle 1762 protrudes away from the second reinforcing rib portion 1761 to form a second bump 17621. That is to say, the second reinforcing rib portion 1761 is arranged opposite to the second bump 17621. The second bump 17621 engages with the first bump 164 to detachably secure the supporting component 17 and the first water distribution sheet 16. The second reinforcing rib portion 1761 can improve the structural strength of the second hook 176. Each of the plurality of second hooks 176 comprises a respective second bump 17621, disposed thereon and configured to engage with a corresponding one of the plurality of first bumps 164.

For example, in the vertical direction X, the first flange 175 is provided with a second groove 177 at a position corresponding to each second hook 176. The second groove 177 provides an avoidance space for the cooperation of the first bump 164 and the second bump 17621, such that a space for deformation can be provided during the cooperation of the second bump 17621 and the first bump 164.

During mounting, each second hook 176 first extends into one first groove 162 in the vertical direction X, and the first water distribution sheet 16 is rotated relative to the side wall 173 of the supporting component, such that the second bump 17621 of each second hook 176 passes over the first bump 164 through the second groove 177 in the circumferential direction R to limit the side wall 173 of the supporting component and the first water distribution sheet 16 in the circumferential direction R and the vertical direction X.

For example, in the vertical direction X, a handle 166 is arranged above the first boss 161 of the first water distribution sheet 16, and the handle 166 has the function of replacing the protruding post 171, so that a user can remove the supporting component 17 and the first water distribution sheet 16 together from the filter 1 to replace the fiber balls 15 (not shown in FIGS. 25 to 28). The handle 166 extends vertically from a side of the first water distribution sheet 16 facing the cartridge cover 11.

After the first water distribution sheet 16 and the side wall 173 of the supporting component are mounted, the supporting component 17, the side wall 173 of the supporting component and the first water distribution sheet 16 form a cylinder body with the accommodating chamber 174 (that is, the second filter chamber 120), and the fiber balls 15 are placed in the accommodating chamber 174. When the fiber balls 15 are to be replaced, the cylinder body (that is, the components including the supporting component 17, the first water distribution sheet 16 and the fiber balls 15) can be wholly removed from the filter 1 by means of the handle 166 to implement the replacement, which is very convenient.

Referring to FIG. 20 and in combination with FIGS. 2, 7, 8b and 9, For example, the electric motor 180 of the filter pump 18 is secured to the side of the partition plate 127 away from the supporting component 17 in the vertical direction X by means of screws 19, that is, the electric motor 180 is arranged below the partition plate 127 of the filter cartridge.

According to one or more other example aspects, referring to FIG. 20, at positions corresponding to two sides of the electric motor 180, the partition plate 127 is recessed downward in the vertical direction X to form two mounting recesses 128, and the bottoms of the mounting recesses 128 may provide mounting bases for the electric motor 180 so as to secure the electric motor 180, and the length of the screws 19 can be shortened, potentially saving on costs.

According to one or more other example aspects, a position, close to the bottom, of the side wall 121 of the filter cartridge is recessed towards the interior of the filter cartridge 12 in the radial direction Z to form a securing recess 129. Four securing recesses 129 are arranged in the embodiment of the present application, but the number of securing recesses 129 is not specifically limited in the embodiment of the present application, and may be one, two, three, etc.

For example, the bottom of each securing recess 129 in the vertical direction X is provided with a securing screw hole 1291, and the securing screw hole 1291 is configured to secure the filter cartridge 12 on the ground so as to aid in improving a stability of the filter 1.

According to one or more other example aspects, on the basis of the above-described example embodiments, the supporting component 17 may be replaced by a second water distribution sheet 216 (shown in FIGS 8c and 8d), and the second water distribution sheet 216 is structurally the same as the first water distribution sheet 16. The only difference that may occur between the structure of the first water distribution sheet 16 and the second water distribution sheet 216 is the presence of a protruding post 171. In other words, the second water distribution sheet 216 may be provided with the protruding post 171 (FIG 8d) or provided with no protruding post 171 (FIG 8c), and in this latter case it will be exactly like the first water distribution sheet 16. In the vertical direction X, a chamber between the cartridge cover 11 and the first water distribution sheet 16 is the first filter chamber 110, and the first filter chamber 110 is configured to coarsely filter the water flowing into the filter 1 so as to intercept large-particle impurities. The second water distribution sheet 216, alternatively placed in the same position of the supporting component 17, is arranged in a spaced manner below the first water distribution sheet 16 in the vertical direction X (see FIGS 8c, 8d) so as to define the second filter chamber 120 between the second water distribution sheet 216 and the first water distribution sheet 16 in the vertical direction X (as in the same way, in the embodiment of figure 8b, the second filter chamber 120 is defined between the supporting component 17 and the first water distribution sheet 16). In the vertical direction X, the second filter chamber 120 is located below the first filter chamber 110 and is in fluid communication with the first filter chamber 110. The fiber balls 15 are arranged in the second filter chamber 120 to further filter the water coarsely filtered in the first filter chamber 110 (that is, flowing through the first water distribution sheet 16). In the vertical direction X, the second water distribution sheet 216 and the partition plate 127 define the transition chamber 126.

According to an example aspect, a peripheral edge of the second water distribution sheet 216 extends in the vertical direction X towards the first water distribution sheet 16 to form an annular side wall. The second water distribution sheet 216, the annular side wall and the first water distribution sheet 16 define the second filter chamber 120.

For example, in the vertical direction X, a distance between the first water distribution sheet 16 and the second water distribution sheet 216 may account for approximately 32% to 55% of the diameter of the second water distribution sheet 216.

A specific example structure of the above-mentioned water filter 6 will be described in detail below in combination with the figures.

### Example Embodiment II

FIG. 29 shows a perspective view of the water filter 6 according to an example embodiment, and FIG. 30 shows a schematic cross-sectional structure diagram of the water filter 6 according to an example embodiment.

Referring to FIGS. 29 and 30, the water filter 6 comprises a coarse filter cartridge 61, a housing 62, a water filter cartridge 63 and a multi-position valve 64. The housing 62 internally comprises assemblies such as a water pump (not shown), a controller (not shown), etc.

For example, the water pump comprises a water inlet (not shown) and a water outlet (not shown). The coarse filter cartridge is in fluid communication with the water inlet, and the water filter cartridge is in fluid communication with the water outlet.

For example, the coarse filter cartridge 61 is provided with a water intake channel 6a, and the water intake channel 6a is configured to allow water to enter the coarse filter cartridge 61 for coarse filtration of the water, so as to remove large-particle impurities. The water pump is in fluid communication with the coarse filter cartridge 61 to pump the water filtered by the coarse filter cartridge 61 into the multi-position valve 64.

For example, the multi-position valve 64 covers the upper end of the water filter cartridge 63, and in the vertical direction X, the multi-position valve 64 and the water filter cartridge 63 define a second chamber 630. The water pumped into the multi-position valve 64 by the water pump can enter the second chamber 630 through an internal pipeline (not shown) of the multi-position valve 64. A plurality of fiber balls 15 are arranged in the second chamber 630. The fiber balls 15 further filter the water filtered by the coarse filter cartridge 61.

The fiber balls 15 are substantially structurally the same as the fiber balls 15 in the first example embodiment, which will not be repeated in this example embodiment.

Specifically, the water pump is in fluid communication with the multi-position valve 64 by means of a connecting pipe 65.

For example, the multi-position valve 64 is further provided with a water discharge channel 6b. The water intake channel 6a is configured to allow water to leave the water filter 6.

For example, the interior of the multi-position valve 64 is provided with a plurality of internal pipelines. The pipeline for fluid communication between the multi-position valve 64 and the water pump is referred to as a first pipeline, the pipeline for fluid communication between the multi-position valve 64 and the second chamber 630 is referred to as a second pipeline, and the pipeline for fluid communication between the multi-position valve 64 and the water discharge channel 6b is referred to as a third pipeline.

According to an example aspect, the second chamber 630 is further internally provided with a return pipe 66 extending in the vertical direction X, one end of the return pipe 66 in the vertical direction is in fluid communication with the third pipeline of the multi-position valve 64, and the other end of the return pipe extends to the bottom of the second chamber 630. The return pipe 66 is provided with a plurality of inlets at the second chamber 630, and a filter element 67 is arranged at each inlet, and the filter elements 67 can prevent the fiber balls 15 from blocking the return pipe 66.

Specifically, the return pipe 66 has the function of allowing the water filtered by the fiber balls 15 to flow into the third pipeline of the multi-position valve 64 through the return pipe 66, to enter the water discharge channel 6b through the third pipeline of the multi-position valve 64, and to leave the water filter 6 through the water discharge channel 6b.

For example, a flow direction of the water inside the filter 6 is as shown in FIG. 30. The water enters the coarse filter cartridge 61 through the water intake channel 6a in a direction K to filter the large-particle impurities in the water. The water filtered by the coarse filter cartridge 61 is pumped into the first pipeline of the multi-position valve 64 by the water pump in a direction L. Next, the water in the first pipeline flows into the second chamber 630 in a direction M, and is filtered by the fiber balls 15. The water filtered by the fiber balls 15 flows to the bottom of the second chamber 630 in a direction N, enters the return pipe 66, then flows from the return pipe 66 to the third pipeline of the multi-position valve 64 in a direction O, enters the water discharge channel 6b through the third pipeline, and finally flows out of the water discharge channel 6b in a direction P, leaving the water filter 6.

It may be understood that the example embodiments described herein may be considered in a descriptive sense only and not for purposes of limitation. Descriptions of features or aspects within each example embodiment may be considered as available for other similar features or aspects in other example embodiments.

While example embodiments have been described with reference to the figures, it will be understood by those of ordinary skill in the art that various changes in form and details may be made therein without departing from the scope as defined by the following claims.

## Claims

1. A filter, comprising:
a filter cartridge (12), comprising a side wall and an upper end;
a cartridge cover (11) disposed on the upper end of the filter cartridge (12), the cartridge cover (11) and the filter cartridge (12) together defining a first chamber (10);
a filter chamber (100) disposed in the first chamber (10);
a fiber filter material (15) disposed in the filter chamber (100);
a water intake channel (1a) disposed on one of the filter cartridge (12) and the cartridge cover (11) and in fluid communication with the filter chamber (100); and
a water discharge channel (1b) in fluid communication with the filter chamber (100);
wherein the filter chamber (100) comprises:
a first filter chamber (110); and
a second filter chamber (120) located below the first filter chamber (110) in a vertical direction and spaced from and in fluid communication with the first filter chamber (110), wherein the fiber filter material (15) is disposed in the second filter chamber (120); and
the filter further comprises:
a first water distribution sheet (16) disposed in the first chamber (10), the first water distribution sheet (16) and the cartridge cover (11) together defining the first filter chamber (110);
the filter being **characterized in that**
the first water distribution sheet (16) comprises:
a first boss (161) extending vertically upward from a center of the first water distribution sheet (16);
a plurality of first through holes (1611) extending through the first boss (161) in the vertical direction;
a plurality of first ribs (163) spaced from each other in a circumferential direction of the first water distribution sheet (16) and each extending in a radial direction from the first boss (161) to an edge of the first water distribution sheet (16), wherein a height of each of the plurality of first ribs (163) decreases from the first boss (161) to the edge of the first water distribution sheet (16); and
a plurality of second ribs (165) spaced apart from each other in the radial direction and each extending in the circumferential direction of the first water distribution sheet (16); and
a plurality of second through holes (160), each extending through the first water distribution sheet (16) in a vertical direction between two adjacent ones of the plurality of first ribs (163) and between two adjacent ones of the plurality of second ribs (165).

2. The filter of claim 1, wherein:
the fiber filter material (15) comprises a plurality of substantially spherical fiber balls, each of the plurality of fiber balls comprising a fixing member (152) and a plurality of fiber filaments (151) knotted together by the fixing member (152), such that the fixing member (152) is disposed at a center of the fiber ball.

3. The filter of claim 2, wherein:
a volume of the plurality of fiber balls (15) comprises 40% to 60% of a volume of the filter cartridge (12);
a density of each of the plurality of fiber balls is 1.38 g/cm³; and
a specific surface area of each of the plurality of fiber balls is 3000 m²/m³.

4. The filter of claim 1, wherein the filter chamber (100) comprises a supporting component (17) disposed in the first chamber (10) and spaced below the first water distribution sheet (16) at an interval in the vertical direction, the supporting component (17) and the first water distribution sheet (16) together defining the second filter chamber (120).

5. The filter of claim 4, wherein:
the first water distribution sheet (16) is detachably connected to the cartridge cover (11);
the first water distribution sheet (16) comprises:
first grooves (162) spaced at intervals along an edge of the first water distribution sheet (16); and
first bumps (164) protruding toward the supporting component (17) in the vertical direction and disposed on edges of the first grooves (162); and
the cartridge cover (11) comprises:
a cartridge cover side wall (1101) extending downward in the vertical direction; and
first hooks (112) disposed at positions at a bottom of the cartridge cover (11) corresponding positions of the first grooves (162), wherein the first hooks (112) comprise second bumps (11211) configured to engage with the first bumps (164).

6. The filter of claim 4, wherein
an edge of the supporting component (17) extends upward in the vertical direction, thereby forming a side wall of the supporting component (17);
the side wall (173) of the supporting component (17), the supporting component (17) and the first water distribution sheet (16) together define the second filter chamber (120);
an upper end of the side wall (173) of the supporting component (17) extends outward, thereby forming a first flange (175); and
an upper end (1210) of the side wall (121) of the filter cartridge (12) comprises a step (1211) which supports the first flange (175) thereon, thereby supporting the supporting component (17) in the filter cartridge (12).

7. The filter of claim 4, wherein:
the supporting component (17) is detachably connected to the first water distribution sheet (16);
the first water distribution sheet (16) comprises:
a plurality of first grooves (162) spaced at intervals along an edge of the first water distribution sheet (16); and
a plurality of first bumps (164) protruding towards the cartridge cover (11) in the vertical direction and each disposed on an edge of a respective one of the plurality of first grooves (164);
the supporting component (17) comprises:
a side wall (173) extending upward along an edge of the supporting component (17) and comprising a plurality of second grooves (177) spaced along an upper end of the side wall (173) of the supporting component (17); and
a plurality of second hooks (176) disposed, at positions along the upper end of the side wall (173) of the supporting component (17) corresponding to positions of the plurality of first grooves (162) along the edge of the first water distribution sheet (16), each of the plurality of second hooks (176) comprising a second bump (17621) disposed thereon and configured to engage with a corresponding one of the plurality of first bumps (164); and
a handle (166) extending vertically from a side of the first water distribution sheet (16) facing the cartridge cover (11).

8. The filter of claim 1 or 4, further comprising:
a step (1211) disposed at an upper end (1210) of the side wall (121) of the filter cartridge (12);
wherein the first water distribution sheet (16) is disposed on the step (1211).

9. The filter of claim 1 or 4, wherein a central one of the plurality of second ribs (165) is a first reinforcing rib (1651) extending in the circumferential direction of the first water distribution sheet (16), wherein a height of the first reinforcing rib (1651) is greater than a height of each other of the plurality of second ribs (165).

10. The filter of claim 1, further comprising:
a supporting component (17) disposed in the first chamber (10), the supporting component (17) and the cartridge cover (11) together defining the filter chamber (100), wherein the fiber filter material (15) is disposed in the filter chamber (100);
wherein the supporting component (17) comprises a plurality of third through holes (170) extending therethrough in a vertical direction; and
wherein each of the plurality of third through holes (170) extends in an elongated shape in a radial direction of the supporting component (17).

11. The filter of claim 4, wherein:
the filter cartridge (12) further comprises a partition plate (127) a spaced below the supporting component (17) in the vertical direction, wherein the partition plate (127) and the side wall (121) of the filter cartridge (12) are integrally formed;
the supporting component (17), the partition plate (127), and the side wall (121) of the filter cartridge (12) together define a transition chamber (126) configured to converge water flowing through the second filter chamber (120);
the filter cartridge (12) further comprises a second flange (122) disposed on one of the partition plate (127) or surrounding an inner surface of the side wall (121) of the filter cartridge (12), wherein the supporting component (17) is disposed on the second flange (122);
the filter further comprises a filter pump (18) disposed below the partition plate (127) and comprising a filter pump water intake channel (181) and the water discharge channel (1b); and
a part of the partition plate (127) is recessed downward thereby forming a filter pump water inlet (1271) in communication with the filter pump water intake channel (181).

12. The filter of claim 1 comprising:
a first water distribution sheet (16) disposed inside the filter cartridge (12), wherein the first water distribution sheet (16) and the cartridge cover (11) together define a first filter chamber (110);
a second water distribution sheet (216) disposed inside the filter cartridge (12), wherein the second water distribution sheet (216) and the first water distribution sheet (16) together define a second filter chamber (120);
said fiber filter material (15) being disposed in the second filter chamber (120);
a water intake channel (1a) in fluid communication with the first filter chamber (110); and
a water discharge channel (1b) in fluid communication with the second filter chamber (120).

13. The filter of claim 12, further comprising:
a partition plate (127) disposed in the filter cartridge (12), wherein the partition plate (127) and the second water distribution sheet (216) together define a transition chamber (126); and
a filter pump (18) disposed below the partition plate (127) and in fluid communication with the transition chamber (126).

14. An above-ground pool, comprising:
a side wall comprising a water inlet (224) and a water outlet (223);
a filter (1) according to any one of claims 1 to 13;
a water intake pipe (3), comprising a first end (301) in communication with the water outlet (223) of the above-ground pool, and a second end (302) in communication with the water intake channel (1a) of the filter; and
a water discharge pipe (4), comprising a first end (401) in communication with the water discharge channel (1b) of the filter, and a second end (402) in communication with the water inlet (224) of the above-ground pool.

## Patentansprüche

1. Ein Filter, bestehend aus:
eine Filterpatrone (12), die eine Seitenwand und ein oberes Ende aufweist;
eine am oberen Ende der Filterpatrone (12) angeordnete Patronenabdeckung (11), wobei die Patronenabdeckung (11) und die Filterpatrone (12) gemeinsam eine erste Kammer (10) bilden;
eine in der ersten Kammer (10) angeordnete Filterkammer (100);
ein in der Filterkammer (100) angeordnetes Faserfiltermaterial (15);
einen Wasserzulaufkanal (1a), der an der Filterpatrone (12) oder der Patronenabdeckung (11) angeordnet ist und in Fluidverbindung mit der Filterkammer (100) steht; und
einen Wasserablaufkanal (1b), der mit der Filterkammer (100) in Fluidverbindung steht;
wobei die Filterkammer (100) Folgendes umfasst:
eine erste Filterkammer (110); und
eine zweite Filterkammer (120), die in vertikaler Richtung unterhalb der ersten Filterkammer (110) angeordnet ist, von dieser beabstandet ist und mit ihr in Fluidverbindung mit der ersten Filterkammer (110),
wobei das Fasermaterial (15) in der zweiten Filterkammer (120) angeordnet ist; und
der Filter umfasst ferner:
eine erste Wasserverteilungsplatte (16), die in der ersten Kammer (10) angeordnet ist, wobei die erste Wasserverteilungsplatte (16) und die Patronenabdeckung (11) gemeinsam die erste Filterkammer (110) bilden;
wobei der Filter **dadurch gekennzeichnet ist, dass** die erste Wasserverteilungsplatte (16) Folgendes umfasst:
eine erste Erhebung (161), die sich von der Mitte der ersten Wasserverteilungsplatte (16) vertikal nach oben erstreckt;
eine Vielzahl von ersten Durchgangslöchern (1611), die sich in vertikaler Richtung durch die erste Erhebung (161) erstrecken;
eine Vielzahl von ersten Rippen (163), die in Umfangsrichtung der ersten Wasserverteilungsplatte (16) voneinander beabstandet sind und sich jeweils in radialer Richtung von der ersten Erhebung (161) zu einem Rand der ersten Wasserverteilungsplatte (16) erstrecken, wobei die Höhe jeder der mehreren ersten Rippen (163) von der ersten Erhebung (161) zum Rand der ersten Wasserverteilungsplatte (16) hin abnimmt; und
eine Vielzahl von zweiten Rippen (165), die in radialer Richtung voneinander beabstandet sind und sich jeweils in Umfangsrichtung der ersten Wasserverteilungsplatte (16) erstrecken; und
eine Vielzahl von zweiten Durchgangsbohrungen (160), die sich jeweils in vertikaler Richtung durch die erste Wasserverteilungsplatte (16) zwischen zwei benachbarten der Vielzahl von ersten Rippen (163) und zwischen zwei benachbarten der Vielzahl von zweiten Rippen (165) erstrecken.

2. Filter nach Anspruch 1, wobei:
das Faserfiltermaterial (15) eine Vielzahl von im Wesentlichen kugelförmigen Faserkugeln umfasst, wobei jede der Vielzahl von Faserkugeln ein Befestigungselement (152) und eine Vielzahl von Faserfilamenten (151) umfasst, die durch das Befestigungselement (152) miteinander verknotet sind, sodass das Befestigungselement (152) in der Mitte der Faserkugel angeordnet ist.

3. Filter nach Anspruch 2, wobei:
das Volumen der Vielzahl von Faserkugeln (15) 40% bis 60% des Volumens der Filterpatrone (12) ausmacht;
die Dichte jedes einzelnen der Vielzahl von Faserkugeln 1,38 g/cm³ beträgt; und
Die spezifische Oberfläche jeder einzelnen der zahlreichen Faserkugeln 3000 m²/m³ beträgt.

4. Filter nach Anspruch 1, wobei die Filterkammer (100) ein Stützelement (17) umfasst, das in der ersten Kammer (10) angeordnet ist und in vertikaler Richtung in einem Abstand unterhalb der ersten Wasserverteilungsplatte (16) liegt, wobei das Stützelement (17) und die erste Wasserverteilungsplatte (16) gemeinsam die zweite Filterkammer (120) bilden.

5. Filter nach Anspruch 4, wobei:
die erste Wasserverteilungsplatte (16) lösbar mit der Patronenabdeckung (11) verbunden ist;
Die erste Wasserverteilungsplatte (16) Folgendes umfasst:
erste Rillen (162), die in Abständen entlang einer Kante der ersten Wasserverteilungsplatte (16) angeordnet sind; und
erste Vorsprünge (164), die in vertikaler Richtung zur Stützkomponente (17) hin vorstehen und an den Rändern der ersten Nuten (162) angeordnet sind; und
die Patronenabdeckung (11) umfasst:
eine in vertikaler Richtung nach unten verlaufende Seitenwand (1101) der Patronenabdeckung; und
erste Haken (112), die an Stellen an der Unterseite der Patronenabdeckung (11) angeordnet sind, die den entsprechenden Stellen der ersten Nuten (162) entsprechen, wobei die ersten Haken (112) zweite Vorsprünge (11211) aufweisen, die so ausgebildet sind, dass sie mit den ersten Vorsprüngen (164) in Eingriff kommen.

6. Filter nach Anspruch 4, wobei
eine Kante des Stützelements (17) sich in vertikaler Richtung nach oben erstreckt und dadurch eine Seitenwand des Tragelements (17) bildet;
die Seitenwand (173) des Stützelements (17), das Stützelement (17) und die erste Wasserverteilungsplatte (16) zusammen die zweite Filterkammer (120) bilden;
ein oberes Ende der Seitenwand (173) des Stützelements (17) nach außen ragt und dadurch einen ersten Flansch (175) bildet; und
ein oberes Ende (1210) der Seitenwand (121) der Filterpatrone (12) eine Stufe (1211) aufweist, auf welcher der erste Flansch (175) aufliegt, wodurch das Stützelement (17) in der Filterpatrone (12) gehalten wird.

7. Filter nach Anspruch 4, wobei:
das Stützelement (17) lösbar mit der ersten Wasserverteilungsplatte (16) verbunden ist;
die erste Wasserverteilungsplatte (16) Folgendes umfasst:
eine Vielzahl von ersten Nuten (162), die in Abständen entlang einer Kante der ersten Wasserverteilungsplatte (16) angeordnet sind; und
eine Vielzahl von ersten Vorsprüngen (164), die in vertikaler Richtung zur Patronenabdeckung (11) hin vorstehen und jeweils an einer Kante einer der Vielzahl von ersten Nuten (164) angeordnet sind;
das Stützelement (17) Folgendes umfasst:
eine Seitenwand (173), die sich entlang einer Kante des Stützelements (17) nach oben erstreckt und eine Vielzahl von zweiten Nuten (177) aufweist, die entlang eines oberen Endes der Seitenwand (173) des Stützelements (17) beabstandet angeordnet sind; und
eine Vielzahl von zweiten Haken (176), die an Positionen entlang des oberen Endes der Seitenwand (173) des Stützelements (17) angeordnet sind, die den Positionen der Vielzahl von ersten Nuten (162) entlang der Kante der ersten Wasserverteilungsplatte (16) entsprechen, wobei jeder der Vielzahl der zweiten Haken (176) einen zweiten Vorsprung (17621) aufweist, der darauf angeordnet und so ausgebildet ist, dass er mit einer entsprechenden der mehreren ersten Vorsprüngen (164) in Eingriff kommt; und
ein Griff (166), der sich senkrecht von einer Seite der ersten Wasserverteilungsplatte (16) erstreckt, die der Patronenabdeckung (11) zugewandt ist.

8. Filter nach Anspruch 1 oder 4, der ferner Folgendes umfasst:
eine Stufe (1211), die an einem oberen Ende (1210) der Seitenwand (121) der Filterpatrone (12) angeordnet ist;
wobei die erste Wasserverteilungsplatte (16) auf der Stufe (1211) angeordnet ist.

9. Filter nach Anspruch 1 oder 4, wobei eine mittlere der Vielzahl der zweiten Rippen (165) eine erste Verstärkungsrippe (1651) ist, die sich in Umfangsrichtung der ersten Wasserverteilungsplatte (16) erstreckt, wobei die Höhe der ersten Verstärkungsrippe (1651) größer ist als die Höhe jeder anderen der Vielzahl der zweiten Rippen (165).

10. Filter nach Anspruch 1, der ferner Folgendes umfasst:
ein in der ersten Kammer (10) angeordnetes Stützelement (17), wobei das Stützelement (17) und die Patronenabdeckung (11) gemeinsam die Filterkammer (100) bilden, wobei das Filterfasermaterial (15) in der Filterkammer (100) angeordnet ist;
wobei das Stützelement (17) eine Vielzahl von dritten Durchgangslöchern (170) aufweist, die sich in vertikaler Richtung durch dieses hindurch erstrecken; und
wobei sich jede der Vielzahl der dritten Durchgangsbohrungen (170) in einer länglichen Form in radialer Richtung des Stützelements (17) erstreckt.

11. Filter nach Anspruch 4, wobei:
die Filterpatrone (12) ferner eine Trennplatte (127) umfasst, die in vertikaler Richtung unterhalb des Stützelements (17) angeordnet ist, wobei die Trennplatte (127) und die Seitenwand (121) der Filterpatrone (12) einstückig ausgebildet sind;
das Stützelement (17), die Trennplatte (127) und die Seitenwand (121) der Filterpatrone (12) gemeinsam eine Übergangskammer (126) bilde, die so ausgebildet ist, dass sie das durch die zweite Filterkammer (120) strömende Wasser zusammenführt;
die Filterpatrone (12) ferner einen zweiten Flansch (122) umfasst, der entweder an der Trennplatte (127) angeordnet ist oder eine Innenfläche der Seitenwand (121) der Filterpatrone (12) umgibt, wobei das Stützelement (17) an dem zweiten Flansch (122) angeordnet ist;
der Filter ferner eine Filterpumpe (18) umfasst, die unterhalb der Trennplatte (127) angeordnet ist und einen Wasserzulaufkanal (181) der Filterpumpe sowie den Wasserablaufkanal (1b) umfasst; und
ein Teil der Trennplatte (127) nach unten vertieft ist, wodurch ein Wasserzulauf (1271) für die Filterpumpe entsteht, der mit dem Wasserzulaufkanal (181) der Filterpumpe in Verbindung steht.

12. Filter nach Anspruch 1, der Folgendes umfasst:
eine erste Wasserverteilungsplatte (16), die innerhalb der Filterkartusche (12) angeordnet ist, wobei die erste Wasserverteilungsplatte (16) und die Patronenabdeckung (11) gemeinsam eine erste Filterkammer (110) bilden;
eine zweite Wasserverteilungsplatte (216), die innerhalb der Filterpatrone (12) angeordnet ist, wobei die zweite Wasserverteilungsplatte (216) und die erste Wasserverteilungsplatte (16) gemeinsam eine zweite Filterkammer (120) bilden;
wobei das genannte Fasermaterial (15) in der zweiten Filterkammer (120) angeordnet ist;
einen Wasserzulaufkanal (1a), der mit der ersten Filterkammer (110) in Fluidverbindung steht; und
ein Wasserablaufkanal (1b), der mit der zweiten Filterkammer (120) in Fluidverbindung steht.

13. Filter nach Anspruch 12, der ferner Folgendes umfasst:
eine in der Filterpatrone (12) angeordnete Trennplatte (127), wobei die Trennplatte (127) und die zweite Wasserverteilungsplatte (216) gemeinsam eine Übergangskammer (126) bilden; und
eine Filterpumpe (18), die unterhalb der Trennplatte (127) angeordnet ist und in Fluidverbindung mit der Übergangskammer (126) steht.

14. Ein Aufstellpool, bestehend aus:
einer Seitenwand, die einen Wassereinlass (224) und einen Wasserauslass (223) umfasst;
einem Filter (1) gemäß einem der Ansprüche 1 bis 13;
einer Wasserzulaufleitung (3), die ein erstes Ende (301), das mit dem Wasserauslass (223) des Aufstellbeckens verbunden ist, und ein zweites Ende (302) umfasst, das mit dem Wasserzulaufkanal (1a) des Filters verbunden ist; und
eine Wasserablaufleitung (4), die ein erstes Ende (401), das mit dem Wasserablaufkanal (1b) des Filters verbunden ist, und ein zweites Ende (402) aufweist, das mit dem Wassereinlass (224) des Aufstellbeckens verbunden ist.

## Revendications

1. Un filtre, comprenant:
une cartouche filtrante (12), comprenant une paroi latérale et une extrémité supérieure;
un couvercle de cartouche (11) placé à l'extrémité supérieure de la cartouche filtrante (12), le couvercle de cartouche (11) et la cartouche filtrante (12) définissant ensemble une première chambre (10);
une chambre de filtration (100) disposée dans la première chambre (10);
un matériau filtrant en fibres (15) disposé dans la chambre de filtration (100);
un canal d'admission d'eau (1a) disposé sur la cartouche filtrante (12) ou sur le couvercle de cartouche (11) et en communication fluidique avec la chambre de filtration (100); et
un canal d'évacuation d'eau (1b) en communication fluidique avec la chambre de filtration (100);
dans lequel la chambre de filtration (100) comprend:
une première chambre de filtration (110); et
une deuxième chambre de filtration (120) située en dessous de la première chambre de filtration (110) dans le sens vertical, espacée de celle-ci et en communication fluidique avec la première chambre de filtration (110), dans lequel le matériau filtrant en fibres (15) est disposé dans la deuxième chambre de filtration (120); et
le filtre comprend en outre:
une première feuille de distribution d'eau (16) disposée dans la première chambre (10), la première feuille de distribution d'eau (16) et le couvercle de cartouche (11) définissant ensemble la première chambre de filtration (110);
le filtre **se caractérisant par le fait que** la première feuille de distribution d'eau (16) comprend:
une première nervure (161) s'étendant verticalement vers le haut à partir du centre de la première feuille de distribution d'eau (16);
une pluralité de premiers trous traversants (1611) s'étendant à travers le premier bossage (161) dans le sens vertical;
une pluralité de premières nervures (163) espacées les unes des autres dans le sens circonférentiel de la première feuille de distribution d'eau (16) et s'étendant chacune dans le sens radial depuis le premier bossage (161) jusqu'à un bord de la première feuille de distribution d'eau (16), dans laquelle la hauteur de chacune des multiples premières nervures (163) diminue depuis le premier bossage (161) jusqu'au bord de la première feuille de distribution d'eau (16); et
une pluralité de secondes nervures (165) espacées les unes des autres dans la direction radiale et s'étendant chacune dans la direction circonférentielle de la première feuille de distribution d'eau (16); et
une pluralité de seconds trous traversants (160), chacun traversant la première feuille de distribution d'eau (16) dans le sens vertical entre deux nervures adjacentes de la pluralité de premières nervures (163) et entre deux nervures adjacentes de la pluralité de secondes nervures (165).

2. Le filtre selon la revendication 1, dans lequel:
le matériau filtrant en fibres (15) comprend une pluralité de boules de fibres substantiellement sphériques, chacune de ces boules de fibres comprenant un élément de fixation (152) et une pluralité de filaments de fibres (151) noués ensemble par l'élément de fixation (152), de telle sorte que l'élément de fixation (152) est situé au centre de la boule de fibres.

3. Le filtre selon la revendication 2, dans lequel:
le volume de l'ensemble des boules de fibres (15) représente entre 40% et 60% du volume de la cartouche filtrante (12);
la densité de chacune des boules de fibres est de 1,38 g/cm³ ; et
la surface spécifique de chacune des nombreuses boules de fibres est de 3 000 m²/m³.

4. Le filtre selon la revendication 1, dans lequel la chambre de filtration (100) comprend un élément de support (17) disposé dans la première chambre (10) et situé en dessous de la première plaque de distribution d'eau (16) à une certaine distance dans le sens vertical, l'élément de support (17) et la première plaque de distribution d'eau (16) définissant ensemble la deuxième chambre de filtration (120).

5. Le filtre selon la revendication 4, dans lequel:
la première feuille de distribution d'eau (16) est reliée de manière amovible au couvercle de la cartouche (11) ;
la première feuille de distribution d'eau (16) comprend:
des premières rainures (162) espacées à intervalles réguliers le long d'un bord de la première feuille de distribution d'eau (16); et
des premières protubérances (164) faisant saillie vers l'élément de support (17) dans le sens vertical et disposées sur les bords des premières rainures (162); et
le couvercle de cartouche (11) comprend:
une paroi latérale (1101) du couvercle de cartouche s'étendant vers le bas dans le sens vertical; et
des premiers crochets (112) disposés à des emplacements situés au fond du couvercle de cartouche (11) correspondant aux emplacements des premières rainures (162), les premiers crochets (112) comportant des secondes protubérances (11211) conçues pour s'engager avec les premières protubérances (164).

6. Le filtre selon la revendication 4, dans lequel
un bord de l'élément de support (17) s'étend vers le haut dans le sens vertical, formant ainsi une paroi latérale de l'élément de support (17);
la paroi latérale (173) de l'élément de support (17), l'élément de support (17) et la première plaque de distribution d'eau (16) définissent ensemble la deuxième chambre de filtration (120);
l'extrémité supérieure de la paroi latérale (173) de l'élément de support (17) s'étend vers l'extérieur, formant ainsi une première bride (175); et
l'extrémité supérieure (1210) de la paroi latérale (121) de la cartouche filtrante (12) comporte un épaulement (1211) sur lequel repose la première bride (175), ce qui permet de maintenir l'élément de support (17) en place dans la cartouche filtrante (12).

7. Le filtre selon la revendication 4, dans lequel:
l'élément de support (17) est relié de manière amovible à la première feuille de distribution d'eau (16);
la première feuille de distribution d'eau (16) comprend:
une pluralité de premières rainures (162) espacées à intervalles réguliers le long d'un bord de la première feuille de distribution d'eau (16); et
une pluralité de premières protubérances (164) faisant saillie vers le couvercle de la cartouche (11) dans le sens vertical et disposées chacune sur un bord d'une rainure respective parmi la pluralité de premières rainures (164);
l'élément de support (17) comprend:
une paroi latérale (173) s'étendant vers le haut le long d'un bord de l'élément de support (17) et comportant une pluralité de deuxièmes rainures (177) espacées le long d'une extrémité supérieure de la paroi latérale (173) de l'élément de support (17); et
une pluralité de seconds crochets (176) disposés, à des emplacements situés le long de l'extrémité supérieure de la paroi latérale (173) de l'élément de support (17), correspondant aux emplacements de la pluralité de premières rainures (162) le long du bord de la première feuille de distribution d'eau (16), chacun des seconds crochets (176) comprenant une seconde protubérance (17621) disposée sur celui-ci et configurée pour s'engager avec l'une correspondante de la pluralité de premières protubérances (164); et
une poignée (166) s'étendant verticalement à partir d'un côté de la première plaque de distribution d'eau (16) tourné vers le couvercle de la cartouche (11).

8. Le filtre selon la revendication 1 ou 4, comprenant en outre:
un épaulement (1211) situé à l'extrémité supérieure (1210) de la paroi latérale (121) de la cartouche filtrante (12);
dans lequel la première feuille de répartition de l'eau (16) est disposée sur le rebord (1211).

9. Le filtre selon la revendication 1 ou 4, dans lequel une nervure centrale parmi la pluralité de secondes nervures (165) est une première nervure de renfort (1651) s'étendant dans la direction circonférentielle de la première feuille de distribution d'eau (16), la hauteur de la première nervure de renfort (1651) étant supérieure à celle de chacune des autres nervures de la pluralité de secondes nervures (165).

10. Le filtre selon la revendication 1, comprenant en outre:
un élément de support (17) disposé dans la première chambre (10), l'élément de support (17) et le couvercle de cartouche (11) définissant ensemble la chambre de filtration (100), le matériau filtrant en fibres (15) étant disposé dans la chambre de filtration (100);
dans lequel l'élément de support (17) comprend une pluralité de troisièmes trous traversants (170) s'étendant à travers celui-ci dans une direction verticale; et
dans lequel chacun des multiples trous traversants (170) s'étend selon une forme allongée dans une direction radiale de l'élément de support (17).

11. Le filtre selon la revendication 4, dans lequel:
la cartouche filtrante (12) comprend, en outre, une plaque de séparation (127) située à une certaine distance en dessous de l'élément de support (17) dans le sens vertical, la plaque de séparation (127) et la paroi latérale (121) de la cartouche filtrante (12) étant formées d'un seul tenant;
l'élément de support (17), la plaque de séparation (127) et la paroi latérale (121) de la cartouche filtrante (12) définissent ensemble une chambre de transition (126) conçue pour canaliser l'eau s'écoulant à travers la deuxième chambre de filtration (120) ;
la cartouche filtrante (12) comprend, en outre, une deuxième bride (122) disposée soit sur la plaque de séparation (127), soit autour d'une surface intérieure de la paroi latérale (121) de la cartouche filtrante (12), l'élément de support (17) étant disposé sur cette deuxième bride (122);
le filtre comprend, en outre, une pompe de filtration (18) disposée sous la plaque de séparation (127) et comportant un canal d'admission d'eau de la pompe de filtration (181) et le canal d'évacuation d'eau (1b); et
une partie de la plaque de séparation (127) est évidée vers le bas, formant ainsi une entrée d'eau (1271) pour la pompe de filtration, en communication avec le canal : d'aspiration d'eau (181) de la pompe de filtration.

12. Le filtre selon la revendication 1, comprenant:
une première feuille de distribution d'eau (16) disposée à l'intérieur de la cartouche filtrante (12), la première feuille de distribution d'eau (16) et le couvercle de la cartouche (11) définissant ensemble une première chambre de filtration (110);
une deuxième feuille de répartition d'eau (216) disposée à l'intérieur de la cartouche filtrante (12), la deuxième feuille de distribution d'eau (216) et la première feuille de répartition d'eau (16) définissant ensemble une deuxième chambre de filtration (120);
ledit matériau filtrant en fibres (15) étant disposé dans la deuxième chambre de filtration (120);
un canal d'admission d'eau (1a) en communication fluidique avec la première chambre de filtration (110); et
un canal d'évacuation d'eau (1b) en communication fluidique avec la deuxième chambre de filtration (120).

13. Le filtre selon la revendication 12, comprenant en outre:
une plaque de séparation (127) disposée dans la cartouche filtrante (12), la plaque de séparation (127) et la deuxième feuille de distribution d'eau (216) définissant ensemble une chambre de transition (126); et
une pompe de filtration (18) disposée sous la plaque de séparation (127) et en communication fluidique avec la chambre de transition (126).

14. Une piscine hors sol, comprenant:
une paroi latérale comportant une entrée d'eau (224) et une sortie d'eau (223);
un filtre (1) selon l'une quelconque des revendications 1 à 13;
un tuyau d'admission d'eau (3), comprenant une première extrémité (301) reliée à la sortie d'eau (223) de la piscine hors sol, et une deuxième extrémité (302) reliée au canal d'admission d'eau (1a) du filtre; et
un tuyau d'évacuation d'eau (4), comprenant une première extrémité (401) reliée au canal d'évacuation d'eau (1b) du filtre, et une deuxième extrémité (402) reliée à l'entrée d'eau (224) de la piscine hors sol.
